(19) **Europäisches Patentamt**
European Patent Office
Office européen des brevets

(11) **EP 3 766 268 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **19707345.5**

(22) Anmeldetag: **21.02.2019**

(51) Internationale Patentklassifikation (IPC):
*H04L 9/40* *(2022.01)*    *H04W 12/69* *(2021.01)*
*H04W 12/02* *(2009.01)*

(52) Gemeinsame Patentklassifikation (CPC):
**H04W 12/02; H04L 63/0414; H04W 12/69**

(86) Internationale Anmeldenummer:
**PCT/EP2019/054387**

(87) Internationale Veröffentlichungsnummer:
**WO 2019/174888 (19.09.2019 Gazette 2019/38)**

(54) **VERFAHREN UND VORRICHTUNGEN ZUM SENDEN UND IDENTIFIZIEREN VON FUNKKENNUNGEN**

METHODS AND DEVICES FOR TRANSMITTING AND IDENTIFYING RADIO IDENTIFIERS

PROCÉDÉS ET DISPOSITIFS POUR ÉMETTRE ET IDENTIFIER DES INDICATIFS RADIO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2018 DE 102018203949**

(43) Veröffentlichungstag der Anmeldung:
**20.01.2021 Patentblatt 2021/03**

(73) Patentinhaber: **Bayerische Motoren Werke Aktiengesellschaft**
**80809 München (DE)**

(72) Erfinder: **SALFER, Martin**
**80809 München (DE)**

(56) Entgegenhaltungen:
**EP-A1- 2 456 242       DE-A1-102015 204 210**
**US-A1- 2006 123 134**

**EP 3 766 268 B1**

## Beschreibung

Die vorliegende Erfindung betrifft die Verschleierung von Funkkommunikation, insbesondere solcher eines mobilen Senders, mittels dynamischer, pseudozufälliger Funkkennungen. Insbesondere betrifft die Erfindung Verfahren zum Senden solcher Funkkennungen sowie zum empfängerseitigen Identifizieren einer Mobilfunkvorrichtung anhand solcher Funkkennungen, sowie eine mobile Funkvorrichtung sowie ein System zur Ausführung dieser Verfahren und ein Fahrzeug, insbesondere ein Kraftfahrzeug, mit einer derartigen mobilen Funkvorrichtung oder einem solchen System.

Zur drahtlosen Kommunikation zwischen zwei oder mehr Teilnehmern steht heutzutage eine Vielzahl verschiedener Technologien und Protokolle zur Verfügung. Dazu gehören insbesondere auch Funktechnologien für kurzreichweitige Kommunikation über eine Distanz von wenigen Zentimetern bis hin zu einigen hundert Metern. Zu diesen Technologien gehören insbesondere WLAN (standardisiert als IEEE 802.11), Bluetooth (standardisiert durch die Bluetooth Special Interest Group sowie IEEE 802.15.1) sowie die bei 3GPP (ab Release 12) standardisierten "LTE-Direct"-Mobilfunktechnologie. Die Teilnehmer an einer solchen drahtlosen Kommunikation können insbesondere mobile Endgeräte, wie etwa mobile Telefone, Smartphones, tragbare Computer wie Tablet-Computer oder Notebooks, Sensoren mit Funkschnittstelle sowie beliebige Geräte, wie etwa Ampeln, sein, die drahtlos an das sogenannte "Internet der Dinge" angebunden sind.

Dabei ist es üblich, dass die Teilnehmer eine statische Teilnehmer- bzw. Netzwerkadresse oder sonstige Funkkennung verwenden, über die sie für andere Teilnehmer erkennbar und/oder adressierbar sind. Dabei heißt "statisch", dass sich diese Adresse oder Funkkennung zeitlich nicht ändert und somit fest mit einem Teilnehmergerät verknüpft ist. Beispiele für derartige statische Adressen bzw. Funkkennungen sind Media Access Control (MAC)-Adressen von WLAN-fähigen Geräten, Bluetooth-Adressen sowie "LTE-Direct-Expressions". Derartige Adressen bzw. Funkkennungen werden meist insbesondere dann von den Funkvorrichtungen ausgesandt, wenn noch keine Funkkommunikation mit einer Gegenseite etabliert ist und die Funkvorrichtung sich zum Aufbau einer solchen für andere Funkvorrichtungen erkennbar macht.

Die Verwendung solcher statischen Adressen oder Funkkennungen hat jedoch zur Folge, dass die zugehörigen mobilen Geräte anhand ihrer solche Adressen oder Funkkennungen enthaltenden Funksignale erkannt und verfolgt werden können, so dass insbesondere auch entsprechende Bewegungsprofile erstellt werden können, ohne dass dies ein Benutzer des Geräts merkt oder vorher freigeben müsste. Beispielsweise ist es bekannt, dass derartige Bewegungsprofile eingesetzt werden können, um unbemerkt Personenüberwachungen durchzuführen oder das Kaufverhalten von Kunden in Einkaufszentren oder Ähnlichem zu erfassen und zu analysieren. Andererseits werden laufend, z.B. im Rahmen sogenannter ortsabhängiger Dienste ("Location-Based Services"), Anwendungen entwickelt, die darauf aufbauen, dass in einem lokalen Umfeld Funkvorrichtungen, etwa Smartphones, identifiziert werden können, um zum Beispiel Freunde über deren mitgeführte Funkvorrichtungen zu finden, Angebote von Verkaufsstellen in der Nähe zu entdecken oder speziell auf einen bestimmten Teilnehmer zugeschnittene Dienstleistungen anzubieten oder zu aktivieren.

Speziell bei der LTE-Direct-Technologie ist zudem eine öffentlich zugängliche Datenbank auf einem sogenannten "Expression Name Server" (ENS) vorgesehen, um die als "LTE-Direkt-Expressions" bezeichneten Funkkennungen von Teilnehmern mit zugehörigen Expression-Inhabern (Dienste, Personen, Firmen, Organisationen usw.) zu verknüpfen. Dabei wird zwischen sogenannten offenen Expressions ("Open Expressions") einerseits, bei denen die Zuordnung zwischen Expression und dem Expression-Inhaber offen zugänglich ist, sowie beschränkten bzw. privaten Expressions ("Restricted Expressions") andererseits unterschieden. Bei Letzteren wird einem anfragenden Teilnehmer die Zuordnung von Expressions zu den zugehörigen Personen usw. durch den ENS nur dann mitgeteilt, wenn zuvor eine entsprechende Autorisierung erfolgt ist. Für die Zuordnung der Funkkennungen zum jeweiligen Expression-Inhaber kann dabei insbesondere eine sogenannte kryptographische Streuwertfunktion (kryptographische Hash-Funktion) verwendet werden, wie sie aus der Kryptologie bekannt ist.

Vor diesem Hintergrund sind aus dem Stand der Technik einzelne Ansätze zum Schutz von Teilnehmern gegen unautorisierte Orts- bzw. Bewegungsverfolgung durch Dritte bekannt. In "LEI, M. et al.; Protecting Location Privacy with Dynamic MAC Address Exchanging in Wireless Networks; Intelligence and Security Informatics; 2007 IEEE", ist ein Verfahren beschrieben, bei dem in einem lokalen Netzwerk (LAN) die MAC-Adressen von aktiven Teilnehmern regelmäßig durch unidirektionale zyklische Ersetzung untereinander vertauscht werden, so dass eine feste Zuordnung von MAC-Adressen zu bestimmten Teilnehmern aufgehoben wird. Auch das mobile Betriebssystem iOS (ab Version iOS 8) von Apple, Inc. verwendet bei WLAN zumindest in bestimmten Situationen zufällig generierte MAC-Adressen anstelle einer eindeutigen MAC-Adresse des entsprechenden iOS-Gerätes, um einen Schutz gegen Nachverfolgung zu erreichen.

Darüber hinaus sind Authentifikationssysteme zur Zugangssteuerung für Netzwerke bekannt, bei denen kryptographische Streuwertfunktionen eingesetzt werden, um regelmäßig, beispielsweise alle 30 Sekunden, ein neues Passwort zu generieren, welches für einen erfolgreichen Zugang im entsprechenden Zeitraum bis zum erneuten Wechsel des Passworts erforderlich ist. Ein solches System ist beispielsweise das "SecurID"-System der Firma RSA Security.

In der deutschen Offenlegungsschrift DE 102015204210 A1 ist ein Lösungsvorschlag zur Erkennung von mobilen Funkvorrichtungen mittels dynamischer, pseudozufälliger Funkkennungen beschrieben. Insbesondere sind dort Verfahren zum Erzeugen und Senden solcher Funkkennungen sowie zum Identifizieren einer Mobilfunkvorrichtung anhand solcher Funkkennungen beschrieben. Dabei wird eine pseudozufällige Sequenz von Funkkennungen gemäß einer Erzeugungsvorschrift und ausgehend von einer Initialisierung mit einem vorbestimmten auf einen bestimmten Zeitpunkt bezogenen Initialisierungswert erzeugt. Funksignale, welche als eine mit der sendenden Funkvorrichtung verknüpfte Identität jeweils eine der Funkkennungen der Sequenz enthalten, können gesendet und von einer Gegenseite empfangen werden, die ebenfalls über die zur Erzeugung der Sequenz erforderlichen geheimen Autorisierungsinformationen verfügt. Dabei wird die jeweils aktuelle Funkkennung gemäß einem vorbestimmten deterministischen Aktualisierungsschema aus der Sequenz von Funkkennungen ausgewählt.

Aus der US 2006/0123134 A1 ist ein Computernetzwerk bekannt, bei dem über eine Netzwerk-Verbindung wie z.B. eine Ethernet-Verbindung zwischen zwei Netzwerkknoten Datenpakete ausgetauscht werden. Um eine sichere Datenübertragung zwischen den beiden Knoten zu ermöglichen werden, abweichend von einem Standard-Kommunikationsprotokoll, senderseitig mittels eines vorgegebenen, empfängerseitig bekannten Algorithmus, beispielsweise auf Basis von Zufallszahlen, in IP- Datenpakete Daten zu Quell-Adressen, Ziel-Adressen und Diskriminator-Feldern eingefügt.

Der vorliegenden Erfindung liegt die Aufgabe zugrunde, eine noch weiter verbesserte Lösung zum Schutz von mobilen Funkvorrichtungen gegen deren Erkennung und/oder Nachverfolgung durch unbefugte Dritte bereitzustellen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein Verfahren zum Senden von Funckennungen mittels einer mobilen Funkvorrichtung. Das Verfahren weist auf: wiederholtes Senden von Funksignalen, welche als eine mit der Funkvorrichtung verknüpfte Identität gegenüber einem Empfänger der Funksignale jeweils eine Funkkennung enthalten. Dabei wird diese jeweilige Funkkennung für jedes der Funksignale dynamisch aus einer Mehrzahl von vordefinierten, verschiedenen und jeweils pseudozufälligen Sequenzen von Funkkennungen ausgewählt, indem (i) eine der Sequenzen gemäß einer vorbestimmten Auswahlvorschrift ausgewählt wird und (ii) aus der so ausgewählten Sequenz gemäß einem dieser Sequenz zugeordneten vorbestimmten deterministischen Aktualisierungsschema eine der darin enthaltenen Funkkennungen ausgewählt wird. Die Anzahl der Sequenzen, aus denen gemäß der Auswahlvorschrift die Auswahl derjenigen Sequenz erfolgt, aus der die nächste für das Senden eines der Funksignale zu verwendenden Funkkennung auszuwählen ist, wird dynamisch variiert.

Unter einer "Funkkennung" oder kurz "Kennung" im Sinne der Erfindung ist eine über ein Funksignal übertragene Information (insbesondere ein charakteristisches Merkmal, Zeichen oder eine Gesamtheit charakteristischer Merkmale oder Zeichen) zur eindeutigen Identifizierung von etwas, insbesondere von der das Funksignal sendenden Funkvorrichtung, zu verstehen. Insbesondere stellen einem Funksignal aufgeprägte Daten oder Signale, wie etwa charakteristische Bitfolgen bzw. Modulationssignale, mittels derer sich eine Quelle oder ein Sender des Funksignals identifizieren lässt, eine "Funkkennung" im Sinne der Erfindung dar.

Unter einer "mobilen Funkvorrichtung" im Sinne der Erfindung ist eine Vorrichtung zu verstehen, mittels derer Funksignale ausgesendet werden können, die zumindest eine Funkkennung aufweisen, und die mobil ist. Unter "mobil" ist dabei im Sinne der Erfindung zu verstehen, dass die Funkvorrichtung dazu ausgelegt ist, ihre räumliche Position zu verändern, insbesondere (i) unmittelbar oder (ii) mittelbar durch Kopplung oder als Teil einer größeren Einheit von einem Benutzer in diesem Sinne räumlich bewegt zu werden. Insbesondere sind tragbare Endgeräte wie Mobiltelefone, Smartphones, Smartwatches, tragbare Computer einschließlich Tablet-Computer, sowie Funkvorrichtungen in oder an Fahrzeugen, die zumindest zusammen mit dem Fahrzeug bzw. als Teil desselben bewegbar sind, mobile Funkvorrichtungen im Sinne der Erfindung.

Unter einer "pseudozufälligen Sequenz" oder kurz "Sequenz" oder "Kette" von Funkkennungen im Sinne der Erfindung ist eine geordnete Abfolge von Funkkennungen zu verstehen, die deterministisch und somit reproduzierbar nach einer Erzeugungsvorschrift, ausgehend von einem Initialwert als Eingabewert für die Erzeugungsvorschrift, generiert werden kann und deren Abfolge von einzelnen Funkkennungen pseudozufällig im Sinne der üblichen mathematischen Bedeutung ist, also zwar berechenbar, aber aus der Perspektive des Betrachters nicht bzw. nur sehr schwer von wirklicher, d.h. nicht-deterministischer, Zufälligkeit zu unterscheiden ist. Unter "Wert", insbesondere "Eingabewert", "Initialwert" oder "Ausgabewert" ist dabei im Sinne der Erfindung eine geschlossen darstellbare Information zu verstehen, die geeignet ist, bei der Erzeugungsvorschrift als Eingabe- bzw. Ausgabegröße zu dienen. So können insbesondere Bitfolgen oder alphanumerische Zeichen (Ziffern, Buchstaben oder Sonderzeichen) sowie Zeichenketten daraus "Werte" im Sinne der Erfindung sein.

Unter einem "deterministischen Aktualisierungsschema" im Sinne der Erfindung ist eine Vorschrift zu verstehen, gemäß der für verschiedenen Zeitpunkte eindeutig bestimmbar ist, welche Funkkennung aus der Sequenz von Funkkennungen gerade aktuell, d.h. auszuwählen, ist. Insbesondere ist eine Vorschrift, gemäß der in festen gleichen Zeitabständen (Perioden) oder gemäß der in verschiedenen aber vorbestimmten Zeitabständen die jeweils nächste Funkkennung der Sequenz aktuell ist, ein deterministisches Aktualisierungsschema im Sinne der Erfindung. Dasselbe gilt allgemein für eine Vorschrift, insbesondere eine mathematische Funktion, die verschiedenen Zeitpunkten einer Zeitskala jeweils eine bestimmte Funkkennung zuweist.

Mittels des erfindungsgemäßen Verfahrens zum Senden von Funkkennungen werden Funkkennungen gesendet, die für einen unautorisierten Dritten nicht oder nur äußerst schwer nachverfolgbar oder vorhersagbar sind, während die Sequenz der Funkkennungen für autorisierte Dritte rekonstruierbar ist und zum Erkennen der sendenden Funkvorrichtung anhand ihrer Funkkennungen genutzt werden kann. Im Unterschied zu der in DE 102015204210 A1 beschriebenen Lösung, bei der nur eine einzige Sequenz vorgesehen ist, kommen bei der vorliegenden Erfindung jedoch mehrere verschiedene pseudozufällige Sequenzen zum Einsatz, sodass die Auswahl einer nächsten zum Senden eines Signals zu verwendenden Funkkennung nicht nur aus einer einzigen Sequenz, sondern aus eine Menge verschiedener Sequenzen erfolgt. Auf diese Weise kann das Sicherheitsniveau bezüglich unautorisierter Identifikation oder Nachverfolgung des Senders noch weiter erhöht werden, da insbesondere Angriffe auf Basis einer Korrelationsanalyse, insbesondere eine Korrelationsanalyse der zeitlichen Wechsel von Funkkennungen, zusätzlich erschwert werden. Somit wird aufgrund der Verwendung einer Mehrzahl verschiedener Funkkennungsketten (= Funkkennungssequenzen) für einen nicht autorisierten Mithörer bzw. Angreifer insbesondere das Zuordnen einer erkannten Signalkorrelation zu einem bestimmten einzelnen Sender erschwert, zumindest sofern mindestens zwei verschiedene Sender im gleichen Zeitraum senden. Autorisierte Empfänger sind dagegen in der Lage, auf Basis ihrer Kenntnis der zugehörigen Erzeugungsvorschriften und Initialisierungen für die jeweiligen einzelnen pseudozufälligen Sequenzen sowie der Auswahlvorschrift zur Auswahl einer zu verwendenden Sequenz aus der Menge der Sequenzen und somit die darauf beruhende senderseitige Funkkennungsauswahl nachzuvollziehen und sich diesbezüglich mit der mit der Senderseite zu synchronisieren. Auf diese Weise wird empfängerseitig eine Erkennung der sendenden Funkvorrichtung bzw. von deren Funksignalen auch über Funkkennungswechsel hinweg ermöglicht.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen weist das Verfahren ein Erzeugen oder Vorhalten der Mehrzahl von pseudozufälligen Sequenzen von Funkkennungen durch die mobile Funkvorrichtung auf, wobei jede der Sequenzen jeweils auf einer ihr zugeordneten Erzeugungsvorschrift und einer Initialisierung der Sequenz mit einem ihr zugeordneten, auf einen bestimmten Zeitpunkt bezogenen Initialisierungswert beruht. Auf diese Weise wird die mobile Funkvorrichtung selbst in die Lage versetzt, die benötigten Funkkennungen zu generieren oder abzurufen, ohne dass dafür während ihres operativen Betriebs eine externe Datenquelle zur Lieferung dieser Informationen benötigt wird.

Bei einigen Ausführungsformen erfolgt gemäß der vorbestimmten Auswahlvorschrift die Auswahl derjenigen Sequenz, aus der die nächste für das Senden eines der Funksignale zu verwendenden Funkkennung auszuwählen ist, auf einem der folgenden Wege: (a) deterministisch, insbesondere mit Hilfe eines deterministischen Zufallszahlengenerators; (b) nicht-deterministisch, insbesondere mit Hilfe eines nicht-deterministischen Zufallszahlengenerators. Die Variante (a) mit einer deterministischen, insbesondere pseudozufälligen, Auswahl einer Sequenz hat den Vorteil, dass empfängerseitig die relevante Sequenz unmittelbar auf Basis der Kenntnis der Auswahlvorschrift ausgewählt werden kann. Die Variante (b) dagegen liefert aufgrund der nicht deterministische Auswahl eine noch höhere Sicherheit gegen Nachverfolgung, allerdings auf Kosten eines erhöhten Aufwands auf Empfängerseite, da dort die zu der empfangenen Funkkennung korrespondierende Sequenz nicht deterministisch bestimmt werden kann. Stattdessen muss sie erst auf Basis von in der Regel mehreren Vergleichen der empfangenen Funkkennung mit den aus den zur Verfügung stehenden Sequenzen jeweils ermittelten entsprechenden Funkkennungen gefunden werden.

Bei einigen Ausführungsformen wird die Anzahl der Sequenzen, aus denen gemäß der Auswahlvorschrift die Auswahl derjenigen Sequenz erfolgt, aus der die nächste für das Senden eines der Funksignale zu verwendenden Funkkennung auszuwählen ist, dynamisch variiert. Dies kann gemäß verschiedener Varianten insbesondere mittels einer oder mehrere der folgenden Maßnahmen erfolgen: (i) Erzeugen einer oder mehrere neuer Sequenzen; (ii) Löschen einer oder mehrere bereits vorhandener Sequenzen; (iii) zumindest temporäres Aktivieren oder Deaktivieren einer oder mehrerer bereits vorhandener Sequenzen, so dass gemäß der Auswahlvorschrift nur derzeit aktivierte Sequenzen auswählbar sind, während derzeit deaktivierte Sequenzen erst nach erneuter Aktivierung erneut auswählbar sind. Auf diese Weise können die Schwierigkeit einer Identifikation und nach Verfolgung eines bestimmten Senders und somit die Sicherheit des Verfahrens noch weiter erhöht werden, da nun keine feste Anzahl verschiedener Sequenzen zum Einsatz kommt. Stattdessen stellt nun die Anzahl der zu einem gegebenen Zeitpunkt verfügbaren Sequenzen für die Auswahl einer Funkkennung eine weitere Variable und somit aus Sicht des Angreifers eine erhöhte Komplexität dar.

Bei einigen zugehörigen Ausführungsformen ist zumindest eine der Maßnahmen zum dynamischen Variieren der Anzahl der Sequenzen auf deterministische Weise pseudozufallsgesteuert. Somit erfolgt hier nicht nur (i) die Erzeugung der jeweiligen Sequenzen jeweils pseudozufallsgesteuert, sondern (ii) auch die Festlegung der Anzahl der gegenwärtig verfügbaren Sequenzen sowie (iii) - jedenfalls in einigen Varianten (s.o.) - auch die Auswahl einer bestimmten Sequenz aus der Menge der derzeit verfügbaren Sequenzen gemäß der Auswahlvorschrift. Somit ist für jedes der Funksignale in allen genannten Fällen (i) bis (iii) empfängerseitig ein deterministisches und somit auch besonders effizientes Rekonstruieren der senderseitig getroffenen Auswahl der Funkkennung ermöglicht.

Bei einigen weiteren zugehörigen Ausführungsformen wird im Falle einer Erzeugung einer neuen Sequenz oder einer Aktivierung, einer Deaktivierung oder eines Löschens einer bereits vorhandenen Sequenz auf gegenüber unbefugtem Zugriff gesicherte Weise eine entsprechende Anmelde- bzw. Abmeldeinformation bezüglich der Sequenz an den Empfänger der Funksignale gesendet. Auf diese Weise kann dem Empfänger bzw. den Empfängern mitgeteilt werden, welche Sequenzen derzeit zur Verfügung stehen bzw. genutzt werden, um senderseitig ein nächstes Funksignal mit einer entsprechenden aus diesen Sequenzen ausgewählten Funkkennung zu versenden. Die Übermittlung dieser Anmelde- bzw. Abmeldeinformationen an den bzw. die Empfänger kann insbesondere mittels verschlüsselter Nachrichtenübermittlung erfolgen.

Bei einigen Ausführungsformen wird die Auswahl derjenigen Sequenz, aus der die nächste für das Senden eines der Funksignale zu verwendenden Funkkennung auszuwählen ist, gemäß der Auswahlvorschrift in Abhängigkeit von der Art der mittels des Funksignals an den Empfänger zu übermittelnden Informationen getroffen. Bei einer möglichen Variante hierzu wird die Auswahl derjenigen Sequenz, aus der für eine Funkkennung für ein nächstes Funksignal zur Übermittlung einer bestimmten Art von Information auszuwählen ist, gemäß der Auswahlvorschrift auf solche Weise in Abhängigkeit von der Art der Informationen getroffen, dass (i) für verschiedene Arten von Informationen jeweils unterschiedliche zugeordnete Teilmengen der aus der Mehrzahl an Sequenzen gebildeten Menge an Sequenzen definiert werden, und (ii) die Auswahl der Funkkennung für die mit dem Funksignal zu übermittelnde Information nur aus denjenigen Sequenzen erfolgt, die in der der Art der mit dem Funksignal zu übermittelnden Information zugeordneten Teilmenge an Sequenzen enthalten sind. Beispielsweise - und ohne dass dies als Einschränkung aufzufassen wäre - könnten zur Funkübermittlung von artverschiedenen Sensordaten in einem Fahrzeug an ein zentrales Steuergerät eine Menge bestehend aus vier aktiven Sequenzen Seq1 bis Seq4 vorliegen, die in eine erste Teilmenge enthaltend die Sequenzen Seq1 und Seq2 sowie eine zweite Teilmenge enthaltend die Sequenzen Seq3 und Seq4 unterteilt ist. Die Sequenzen Seq1 und Seq2 der ersten Teilmenge könnten nur zur Übermittlung von Reifendruckdaten, welche von Drucksensoren an den Reifen erfasst werden, verwendet werden, während die Sequenzen Seq3 und Seq4 der zweiten Teilmenge nur zur Übermittlung von mittels eines Temperaturfühlers erfassten Außentemperaturdaten verwendet werden könnten. Diese Ausführungsformen erleichtern es einerseits dem jeweiligen Empfänger, für bestimmte Daten die richtige Zuordnung zu finden, weil er sich beim Auffinden der relevanten Funkkennung auf die Sequenzen aus der den Daten zugeordneten jeweiligen Teilmenge beschränken kann. Zu anderen wird dadurch gleichzeitig auch die Diversität der Sequenzen untereinander erhöht und somit eine erfolgreiche Korrelationsanalyse bezüglich der verschiedenartig erscheinenden Sequenzen zu dem gleichen Sender weiter erschwert. So erscheinen etwa in der Regel manche Sequenzen als deutlich aktiver als andere, sodass sie nicht ohne weiteres auf Basis einer vergleichbaren, insbesondere gleichmäßigen, Aktivität einander als zum selben Sender gehörig zugeordnet werden können.

Ein zweiter Aspekt der Erfindung betrifft ein Verfahren zum Identifizieren einer ersten mobilen Funkvorrichtung an einer Empfangsvorrichtung, insbesondere einer zweiten mobilen Funkvorrichtung, wobei das Verfahren die folgenden Schritte umfasst: (i) Empfangen eines Funksignals, das eine Funkkennung als eine mit einer das Funksignal aussendenden Signalquelle verknüpfte Identität enthält; (ii) Vergleichen der Funkkennung des empfangenen Funksignals mit einer oder mehreren Funkkennungen, die jeweils aus einer anderen Sequenz, welche aus einer Mehrzahl von vordefinierten, verschiedenen und jeweils pseudozufälligen Sequenzen von Funkkennungen gemäß einer vorbestimmten Auswahlvorschrift ausgewählt werden, gemäß einem der jeweiligen ausgewählten Sequenz zugeordneten vorbestimmten deterministischen Aktualisierungsschema ausgewählt werden; und (iii) Auslösen einer vorbestimmten Funktionalität an der Empfangsvorrichtung, nur in dem Fall, dass bei dem Vergleichen festgestellt wird, dass die empfangene Funkkennung mit einer der dabei mit ihr verglichenen Funkkennungen gemäß einem vorbestimmten Vergleichskriterium übereinstimmen. Empfängerseitig erfolgt die Auswahl der gemäß der Auswahlvorschrift auszuwählenden einen oder mehreren Sequenzen in Abhängigkeit von der Art der im empfangenen Funksignal enthaltenen Information auf solche Weise, dass für verschiedene Arten von Informationen jeweils unterschiedliche zugeordnete Teilmengen der aus der Mehrzahl an Sequenzen gebildeten Menge an Sequenzen ausgewählt werden. Die Auswahl der Funkkennungen zum Vergleichen mit der Funkkennung des empfangenen Funksignals erfolgt nur aus denjenigen einen oder mehreren Sequenzen, die in der derart ausgewählten, der Art der Information aus dem empfangenen Funksignal zugeordneten Teilmenge an Sequenzen enthalten sind.

Mittels des erfindungsgemäßen Verfahrens zum Identifizieren einer ersten (sendenden) mobilen Funkvorrichtung an einer Empfangsvorrichtung kann an Letzterer geprüft werden, ob ein empfangenes Funksignal zu einer ersten mobilen Funkvorrichtung gehört bzw. eine Identität dieser darstellt, für welche die Empfangsvorrichtung über eine Autorisierung zum Nachvollzug von deren Funkkennungssequenzen verfügt. Ist dies der Fall, kann die erste Funkvorrichtung über ihre Funkkennungen, trotz deren zeitlichen Änderung, durch die autorisierte Empfangsvorrichtung auch nachverfolgt werden und eine Kommunikationsverbindung damit aufgenommen bzw. fortgeführt werden. Für unautorisierte Empfangsvorrichtungen ist dies dagegen mangels Nachvollziehbarkeit der Serie an verwendeten Funkkennungen nicht möglich. Bei der Autorisierung werden der Empfängervorrichtung alle Informationen (Autorisierungsinformationen) mitgeteilt, welche erforderlich sind, um die Empfängervorrichtung in die Lage zu versetzen, dieselben Sequenzen von Funkkennungen zu verwenden, insbesondere selbst zu erzeugen, wie die erste Funkvorrichtung. Die Autorisierungsinformationen enthalten regelmäßig für jede der Sequenzen zumindest die Erzeugungsvorschrift, einen zugehörigen auf einen bestimmten Zeitpunkt bezogenen Initialisierungswert sowie das Aktualisierungsschema. Zudem enthalten Autorisierungsinformationen die Auswahlvorschrift zur Auswahl der bezüglich eines bestimmten Funksignals zu verwendenden der Sequenzen. Über das Aktualisierungsschema und die Kopplung des Initialisierungswerts an einen bestimmten Zeitpunkt können für jede der Sequenzen die sendende erste Funkvorrichtung und die Empfängervorrichtung anhand derselben Erzeugungsvorschrift identische und zeitlich synchronisierte Sequenzen von Funkkennungen erzeugen oder aus einer Mehrzahl vorgehaltener oder zugreifbarer Sequenzen auswählen, so dass zu einem gegebenen Zeitpunkt die aktuellen Funkkennungen aus der senderseitigen Sequenz mit der korrespondierenden empfängerseitigen Sequenzen identisch sind.

Mithilfe der Verfahren gemäß dem ersten und dem zweiten Aspekt der Erfindung, insbesondere in ihrem Zusammenspiel, lassen sich insbesondere auch die folgenden Vorteile erreichen: Zunächst lässt sich ein erhöhter Datenschutz erzielen, da die Nachverfolgbarkeit durch Funkkennungsvergleiche, insbesondere Netzwerkadressvergleiche bei statischen Funkkennungen nicht mehr möglich ist, während dies für autorisierte Empfängervorrichtungen nach wie vor möglich bleibt. Auch sind keine externen Mittler oder Datenbanken, wie etwa der ENS im Falle des herkömmlichen LTE-Direct-Ansatzes erforderlich, was zum einen höherer technischer Komplexität und höheren Kosten, zum anderen aber auch der Möglichkeit von Missbrauch entgegenwirkt. Insbesondere wird so eine Nachverfolgung durch den Betreiber eines ENS verhindert bzw. zumindest erschwert. Des Weiteren reduziert sich gegenüber zentralisierten Lösungen durch den Wegfall einer zentralen Stelle (z.B. ENS) der benötigte Datenverkehr, da keine Abfragen von Teilnehmern an der zentralen Stelle mehr erforderlich sind, weil die benötigten Autorisierungsinformationen stattdessen lokal vorgehalten werden. Selbst wenn auch eine zentrale Datenbank zum Einsatz kommt, beispielsweise, um mit den einzelnen Teilnehmern bzw. Funkvorrichtungen assoziierte Informationen für Dritte zur Verfügung zu stellen, bleibt in dem Fall, dass diese Datenbank einmal ausfällt, die Erkennung und Nachverfolgung von als Sender wirkenden mobilen Funkvorrichtungen im Rahmen der Autorisierungen dazu verfügbar, da dies nicht mehr von der zentralen Datenbank bzw. Stelle abhängt.

Nachfolgend werden zunächst bevorzugte Ausführungsformen des Verfahrens gemäß dem zweiten Aspekt der Erfindung und dessen Weiterbildungen beschrieben, die jeweils, soweit dies nicht ausdrücklich ausgeschlossen wird, beliebig miteinander sowie mit den anderen hierin beschriebenen Aspekten der Erfindung kombiniert werden können.

Bei einigen Ausführungsformen erfolgt (i) empfängerseitig die Auswahl der gemäß der Auswahlvorschrift auszuwählenden einen oder mehreren Sequenzen in Abhängigkeit von der Art der im empfangenen Funksignal enthaltenen Information auf solche Weise, dass für verschiedene Arten von Informationen jeweils unterschiedliche zugeordnete Teilmengen der aus der Mehrzahl an Sequenzen gebildeten Menge an Sequenzen ausgewählt werden; und (ii) die Auswahl der Funkkennungen zum Vergleichen mit der Funkkennung des empfangenen Funksignals nur aus denjenigen einen oder mehreren Sequenzen erfolgt, die in der derart ausgewählten, der Art der Information aus dem empfangenen Funksignal zugeordneten Teilmenge an Sequenzen enthalten sind. Auf diese Weise kann sich die Empfängerseite auch im Falle einer nicht-deterministischen Auswahlvorschrift beim Empfang eines Funksignals und der Identifizierung seiner Sendeseite (mobile Funkvorrichtung) auf eine kleinere Anzahl von Sequenzen und somit Funkkennungen daraus, welche für den Vergleich mit der Funkkennung des empfangenen Signals heranzuziehen sind, beschränken. Das kann die Effizienz auf der Empfangsseite steigern und ermöglicht es zudem, im Zusammenspiel mit der entsprechenden Sendeseite eine höhere Diversität der Sequenzen untereinander zu erreichen. So werden insbesondere solche unerwünschten Angriffe weiter erschwert, die auf Korrelationsanalysen der verschiedenartig erscheinenden Sequenzen beruhen. So können etwa die zur Funkübertragung der Funksignale derselben Senderseite verwendeten Sequenzen untereinander deutlich unterschiedliche Einsatzhäufigkeiten aufweisen und als zu verschiedenen Sendern gehörig erscheinen, da sie nicht etwa anhand einer gleichmäßigen Aktivität einander zugeordnet werden können.

Bei einigen Ausführungsformen ist die vorbestimmte Funktionalität abhängig von der jeweiligen durch das Vergleichen erkannten Funkkennung. Auf diese Weise kann spezifisch für jede erkannte Funkkennung wenigstens eine zugeordnete Funktionalität ausgelöst werden, so dass empfängerseitig eine Differenzierung bezüglich der Reaktion auf verschiedene sendende Funkvorrichtungen vorsehbar ist. Insbesondere können so bei einer Empfängervorrichtung in einem Fahrzeug für ein empfangenes Funksignal eines bestimmten ersten Fahrzeugsensors andere Funktionalitäten ausgelöst werden als beim Empfang eines Funksignals eines zweiten Sensors oder gar einer fahrzeugexternen Funkvorrichtung, beispielsweise eines Smartphones des Fahrzeugbesitzers. So könnte etwa der erste Sensor ein Temperaturfühler sein und die zugehörige auszulösende Funktionalität ein Aktualisieren einer Temperaturanzeige im Fahrzeug. Der zweite Sensor könnte ein Füllstandsensor (z.B. für Scheibenwaschmittel) sein und die auszulösende Funktionalität ein Prüfen des Sensorsignals gegenüber einem Mindestwert und beim Unterschreiten des Mindestwerts das Auslösen eines Warnsignals. Beim Erkennen des Smartphones des Benutzers könnte bei gleichzeitig verschlossenem Fahrzeug bzw. ausgeschalteten Motor eine Willkommensinszenierung ausgelöst werden.

Nachfolgend werden nun weitere bevorzugte Ausführungsformen beschrieben, die sowohl Ausführungsformen des Verfahrens gemäß dem ersten Aspekt als auch des Verfahrens gemäß dem zweiten Aspekt der Erfindung sein können. Sie können jeweils wieder, soweit dies nicht ausdrücklich ausgeschlossen wird, beliebig miteinander sowie mit den hierein beschriebenen anderen Aspekten der Erfindung kombiniert werden.

Bei einigen Ausführungsformen wird jede der pseudozufälligen Sequenzen von Funkkennungen reproduzierbar nach einer Erzeugungsvorschrift, ausgehend von einem Initialwert als Eingabewert für die Erzeugungsvorschrift, generiert. Die Erzeugungsvorschrift umfasst dabei die iterative Anwendung einer kryptographischen Streuwertfunktion, die bei jeder Iteration aus wenigstens einem Eingabewert einen Ausgabewert für die jeweilige Iteration liefert, von dem die Funkkennung für das zugehörige Element der Sequenz von Funkkennungen abgeleitet wird. Der Initialisierungswert dient als ein Eingabewert für die erste Iteration und für die nachfolgenden Iterationen dient jeweils der Ausgabewert der unmittelbar vorangegangenen Iteration als ein Eingabewert. Auf diese Weise ist es möglich, auf kompakte Weise mittels einer mathematischen Funktion iterativ eine pseudozufällige Sequenz von Kennungen zu erzeugen. Dabei kann diese Sequenz zumindest teilweise schon im Voraus erzeugt werden, so dass bei einer Aktualisierung der Funkkennung nur eine bereits zuvor erzeugte jeweils nächste Funkkennung aus der Sequenz als aktuelle Funkkennung ausgewählt wird. Alternativ kann die jeweils nächste Funkkennung stattdessen jeweils bei der nächsten Aktualisierung mittels der Streufunktion neu erzeugt werden, so dass vorteilhaft kein Speicher zum Vorhalten von bereits im Voraus erzeugten Funkkennungen erforderlich ist. Auch Mischformen daraus sind möglich.

Der Begriff der "kryptographischen Streuwertfunktion" entspricht dabei deren Bedeutung, wie er in der Kryptologie verwendet wird. Es handelt sich also um eine Hashfunktion, welche im mathematischen Sinne kollisionsresistent oder eine Einwegfunktion (oder beides) ist. Dabei ist eine Streuwertfunktion (Hashfunktion) eine Funktion, die eine Zeichenfolge beliebiger Länge auf eine Zeichenfolge mit fester Länge abbildet. Eine Einwegfunktion ist hier eine Funktion H, bei der es praktisch unmöglich ist, zu einem gegebenen Ausgabewert y einen Eingabewert x zu finden, den die Hashfunktion auf y abbildet (H(x) = y). Eine Hashfunktion ist (schwach) kollisionsresistent, wenn es praktisch unmöglich ist, für einen gegebenen Wert x einen davon verschiedenen Wert x' zu finden, der denselben Hashwert H(x) = H(x') = y für x ≠ x' ergibt. Bei starker Kollisionsresistenz können zudem beide Eingabewerte x und x' frei gewählt werden. Bekannte jüngere Varianten kryptologischer Hashfunktionen sind unter den Namen FORK-256, SHA-3 bzw. BLAKE bekannt. Daneben existieren noch viele weitere kryptologische Hashfunktionen mit unterschiedlich hohem Sicherheitsniveau.

Bei einigen Ausführungsformen wird für wenigstens eine der Iterationen die zugehörige Funkkennung durch Anwendung einer informationsreduzierenden Ableitungsvorschrift auf den Ausgabewert dieser Iteration erzeugt. Auf diese Weise ist es zum einen möglich, Ausgabewerte für die kryptographische Streuwertfunktion zu verwenden, die mehr Information enthalten oder ein anderes Format aufweisen als die Funkkennung. Dabei kann das Format der Funkkennung in einigen Applikationen insbesondere standardisiert sein. Zum anderen kann dadurch auch ein zusätzlicher Sicherheitsgewinn erreicht werden, weil die Rückgewinnung der Ausgabewerte der Streufunktion aus den von einem unbefugten Dritten empfangenen Funkkennungen und eine darauf basierende Voraussage für zukünftige Sequenzelemente zusätzlich verhindert, jedenfalls erschwert wird.

Bei einigen Ausführungsformen definiert die informationsreduzierende Ableitungsvorschrift zumindest einer der Sequenzen ein Auswählen einer Untermenge von Symbolen aus einer symbolbasierten, insbesondere numerischen oder alphanummerischen, Darstellung des Ausgabewerts. Auf diese Weise ist eine einfache Implementierung der informationsreduzierenden Ableitungsvorschrift ohne großen Aufwand möglich, da dafür keine weiteren Berechnungen erforderlich sind. Insbesondere reicht eine primitive Maskierung bzw. Ausfilterung bestimmter Stellen der Darstellung des Ausgabewerts der Streuwertfunktion aus.

Bei einigen Ausführungsformen definiert das Aktualisierungsschema zumindest einer der Sequenzen ein regelmäßiges Ersetzen der aktuellen Funkkennung durch die jeweils nächste Funkkennung aus der Sequenz von Funkkennungen jeweils nach Ablauf einer vorbestimmten Zeitspanne. Die vorbestimmte Zeitspanne kann dabei entweder für alle Aktualisierungen gleich oder stattdessen für verschiedene Aktualisierungen unterschiedlich gewählt sein.

Bei einigen Ausführungsformen stellen die Funkkennungen Netzwerkadressen oder Funkkanäle in einem lokalen Funknetzwerk dar oder sind daraus abgeleitet. Insbesondere können bei einigen Ausführungsformen die zu vergleichenden Funkkennungen jeweils Netzwerkadressen oder Funkkanäle in wenigstens einem der folgenden darstellen: (i) ein WLAN-Netzwerk, (ii) ein Bluetooth®-Netzwerk, oder (iii) ein Mobilfunknetzwerk, insbesondere ein LTE-Netzwerk, einem Drahtlos-Bordnetz in einem Fahrzeug.

Ein dritter Aspekt der Erfindung betrifft eine mobile Funkvorrichtung. Sie weist (i) eine Kommunikationseinrichtung zur Funkkommunikation mit einer Gegenseite und (ii) eine Verarbeitungseinrichtung zum Erzeugen von pseudozufälligen Sequenzen von Funkkennungen und zum Auswählen von Funkkennungen aus den Sequenzen auf. Die mobile Funkvorrichtung ist konfiguriert oder konfigurierbar, das Verfahren gemäß dem ersten und/oder dem zweiten Aspekt der Erfindung auszuführen.

Unter "konfiguriert" ist im Sinne der Erfindung zu verstehen, dass die entsprechende Vorrichtung bereits eingerichtet ist oder einstellbar - d.h. konfigurierbar - ist, eine bestimmte Funktion zu erfüllen. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das konfigurieren mittels einer Auswahl einer dieser Konfigurationen bzw. Betriebsmodi erfolgen kann.

Bei einigen Ausführungsformen ist die Funkvorrichtung mit einer Funktionskomponente eines Fahrzeugs so gekoppelt oder darin integriert, dass die Funkvorrichtung im Betrieb gemäß dem Verfahren nach dem ersten Aspekt Funkkennnungen sendet bzw. gemäß dem Verfahren nach dem zweiten Aspekt empfängt und auswertet, mittels derer im Falle des Sendens die Funktionskomponente selbst identifizierbar ist bzw. im Falle des Empfangens eine andere Funkvorrichtung gegenüber der Funktionskomponente identifizierbar ist.

Bei einigen Ausführungsformen ist die Funktionskomponente ein Steuergerät, ein Sensor, insbesondere ein Reifendrucksensor, ein Aktuator, oder ein Gateway zu einem Bordnetz des Fahrzeugs.

Ein vierter Aspekt der Erfindung betrifft ein System zum Senden und Identifizieren von Funkkennnungen. Das System weist (i) wenigstens eine erste mobile Funkvorrichtung gemäß dem dritten Aspekt der Erfindung auf, die konfiguriert oder konfigurierbar ist, das Verfahren gemäß dem ersten Aspekt der Erfindung auszuführen. Zudem weist das System (ii) wenigstens eine Empfangsvorrichtung, insbesondere wenigstes eine zweite mobile Funkvorrichtung, auf, die konfiguriert oder konfigurierbar ist, im Zusammenspiel mit der als Sender wirkenden wenigstens einen ersten mobilen Funkvorrichtung das Verfahren gemäß dem zweiten Aspekt der Erfindung auszuführen.

Ein fünfter Aspekt der Erfindung betrifft ein Fahrzeug, insbesondere ein Kraftfahrzeug, mit einer mobilen Funkvorrichtung gemäß dem dritten Aspekt der Erfindung oder einem System gemäß dem vierten Aspekt der Erfindung.

Die in Bezug auf den ersten Aspekt (senderseitig) bzw. dem zweiten Aspekt (empfängerseitig) erläuterten Merkmale und Vorteile gelten entsprechend auch für die den weiteren Aspekten der Erfindung entsprechend.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:

Fig. 1 schematisch ein Fahrzeug nach dem fünften Aspekt der Erfindung mit Funktionskomponenten, die jeweils Funkvorrichtungen im Sinne der Erfindung darstellen, sowie eine weitere mobile Funkvorrichtung gemäß dem dritten Aspekt der Erfindung;

Fig. 2 ein Diagramm zur grundsätzlichen Erläuterung der erfindungsgemäßen Verfahren nach dem ersten und zweiten Aspekt der Erfindung anhand einer beispielhaften Ausführungsform;

Die Figuren 3A-3C eine beispielhafte Ausführungsform des senderseitigen Verfahrens gemäß dem ersten Aspekt der Erfindung; und

Fig. 4 eine beispielhafte Ausführungsform des empfängerseitigen Verfahrens gemäß dem zweiten Aspekt der Erfindung.

In den Figuren werden durchgängig dieselben Bezugszeichen für dieselben oder einander entsprechenden Elemente der Erfindung verwendet.

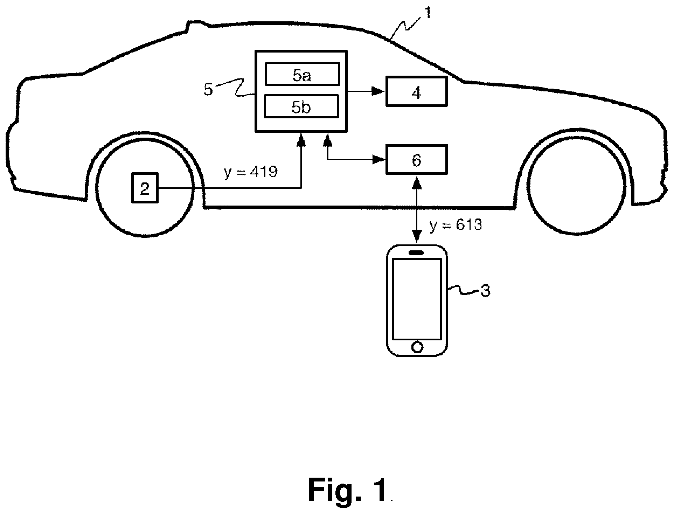

Zunächst wird auf Fig. 1 Bezug genommen. Dort ist ein Fahrzeug dargestellt, genauer ein Kraftfahrzeug 1, welches mehrere Funktionskomponenten aufweist. Eine erste diese Funktionskomponenten ist ein Reifensensor 2, der ausgebildet ist den Reifendruck sowie die Drehzahl des Rades zu messen und diese Messwerte jeweils über eine Funkverbindung an ein Steuergerät 5 zu übermitteln. Eine weitere Funktionskomponente des Fahrzeugs ist eine Schließanlage 4, die als Aktuator wirkt, und von dem Steuergerät 5 angesteuert werden kann, um das Fahrzeug zu öffnen bzw. zu verschließen. Ein Gateway (Protokollumsetzer) 6 ist als weitere Funktionskomponente vorgesehen, die eine Schnittstelle zwischen einerseits einer Luftschnittstelle zur einer mobilen Funkvorrichtung 3, insbesondere einem Smartphone, welches mittels der LTE-Technologie, insbesondere mittels LTE-Direct in Verbindung mit LTE-D2D (LTE Device-to-Device), oder WLAN mit dem Gateway 6 kommuniziert, sowie andererseits einem Bordnetz des Fahrzeugs 1, an das auch das Steuergerät 5 drahtlos oder drahtgebunden oder optisch angeschlossen ist, darstellt. Der Anschluss kann insbesondere über ein bekanntes Bussystem, wie etwa einen für Kraftfahrzeuge bekannten standardisierten CAN oder MOST Bus, oder Ethernet erfolgen.

Alle diese Funktionskomponenten weisen jeweils eine darin integrierte Funkkommunikationsvorrichtung auf bzw. stellen selbst eine solche dar, und diese ist jeweils - wiederum als Teil des Fahrzeugs - eine mobile Funkkommunikationsvorrichtung im Sinne der Erfindung. Jede dieser Funkkommunikationsvorrichtungen weist eine Verarbeitungseinheit sowie eine Kommunikationseinheit auf. Dies ist in Fig. 1 exemplarisch für die Funktionskomponente Steuergerät 5 dargestellt, welches eine Verarbeitungseinheit 5a sowie eine Kommunikationseinheit 5b aufweist. Die Pfeile in Fig. 1 stellen typische Kommunikationsrichtungen zwischen den Funktionskomponenten bzw. dem fahrzeugexternen Smartphone 3 dar.

Ein erster Anwendungsfall für die Erfindung könnte in dieser Konstellation darin bestehen, das eine Annäherung des Smartphones 3 des Fahrzeugbesitzers mittels des Aufbaus einer Funkverbindung zu dem Gateway 6 unter Verwendung einer Funkkennungsauswahl aus mehreren dem Gateway 6 bekannten aber ansonsten geheimen Funkkennungssequenzen des Smartphones 3 erkannt wird. Der Gateway 6 meldet dies über das Bordnetz an das Steuergerät 5 weiter, welches wiederum über eine Funkverbindung unter Nutzung einer Funkkennungsauswahl aus einer Mehrzahl von der Verarbeitungseinheit der Schließanlage 4 bekannten aber ansonsten geheimen anderen Funkkennungssequenzen die Schließanlage 4 mittels eines entsprechenden Funksignals aktiviert, um das Fahrzeug zu entsperren.

In einem anderen Anwendungsfall wird zwischen dem Reifensensor 2, der als Teil des beweglichen Rads des Fahrzeugs während der Fahrt gegenüber diesem eine Rotationsbewegung ausführt, und dem Steuergerät 5 eine Funkverbindung hergestellt, wobei der Reifensensor 2 als Sender zur Übermittlung von Messergebnissen zum Reifendruck wirkt und an das als Empfänger wirkende Steuergerät 5 seine Funksignale mit Funkkennungen gemäß einer Funkkennungsauswahl aus einer Mehrzahl von ihm eigenen geheimen Funkkennungssequenzen sendet, die jedoch dem Steuergerät 5 bekannt sind bzw. dort auf Basis der zugehörigen Autorisierungsinformationen rekonstruiert werden können. Auf gleiche Weise kann auch die ebenfalls gemessene Drehzahl übermittelt werden, entweder mit demselben Funksignal oder aber mit einem eigenen dedizierten Funksignal auf Basis einer Funkkennungsauswahl aus anderen Sequenzen von Funkkennungen. Die Autorisierungsinformationen bezüglich des Reifensensors 2 können insbesondere bereits bei einer werksseitigen Initialisierung im Steuergerät 5 gespeichert worden sein.

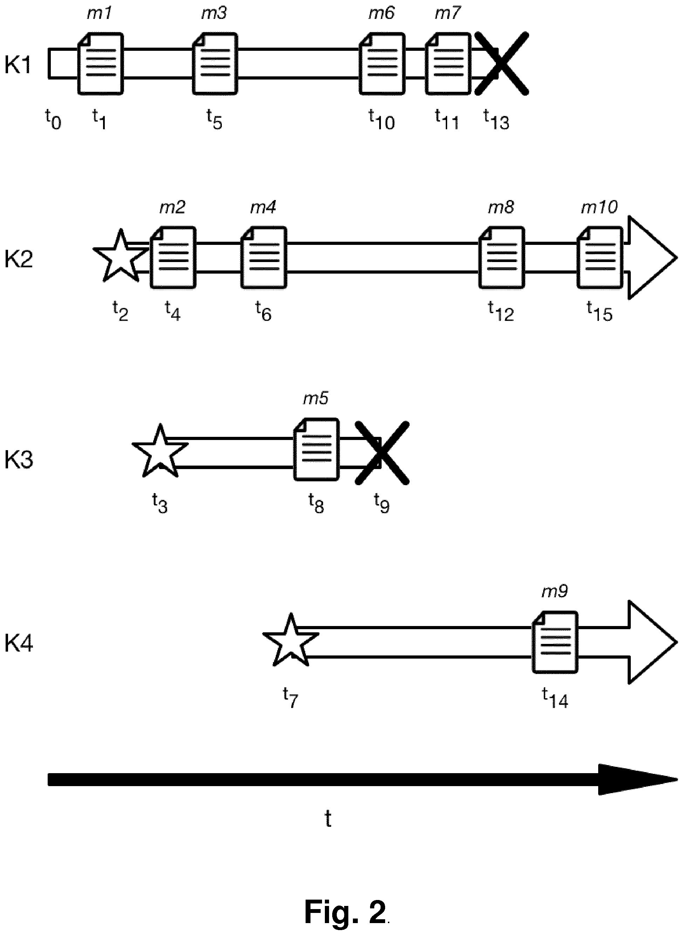

In **Fig. 2** ist ein schematisches Zeitdiagramm zur grundsätzlichen Erläuterung der erfindungsgemäßen Verfahren nach dem ersten und zweiten Aspekt dargestellt. Es zeigt vier beispielhafte Funkkennungssequenzen K1 bis K4, sowie die Zuordnung verschiedener zu sendender Funksignale m1 bis m10, beispielsweise in Form von Nachrichten zur Übermittlung von sensorisch erfassten Messergebnissen, zu diesen Sequenzen. Zu Beginn, am Zeitpunkt t0 ist nur die erste Sequenz K1 aktiv, während die weiteren Sequenzen K2 bis K4 entweder noch gar nicht initialisiert oder aber deaktiviert sind. Ein erstes zu sendendes Funksignal m1 kann daher nur auf die Sequenz K1 zurückgreifen und wird entsprechend mit einer ersten Funkkennung aus dieser Sequenz K1 versehen. Zu den jeweils nachfolgenden Zeitpunkten t2 bzw. t3 werden die zweite Sequenz K2 bzw. die dritte Sequenz K3 initialisiert oder aber, soweit dies bereits vorab geschehen ist, aktiviert. Ein weiteres Funksignal, insbesondere auch desselben Senders, kann nun in Abhängigkeit von einer Auswahlvorschrift, die unter den verfügbaren Sequenzen die zu verwendende auswählt, auch - wie dargestellt - mittels einer Funkkennung aus der Sequenz K2 (oder K3) gesendet werden (Zeitpunkt t4). Die Sequenz K1 bleibt weiterhin aktiv, sodass ein weiteres Funksignal in Abhängigkeit von der Auswahlvorschrift wieder mit der gemäß dem zugehörigen Aktualisierungsschema der Sequenz K1 aktualisierten, nächsten Funkkennung versehen werden kann (Zeitpunkt t5). Für das zum Zeitpunkt t6 zu sendende nächste Funksignal stehen grundsätzlich weiterhin die Sequenzen K1 bis K3 zur Verfügung, aus denen gemäß der Auswahlvorschrift eine Sequenz ausgewählt wird. Im dargestellten Beispiel ist dies wieder die Sequenz K2, sodass das Funksignal m4 mit einer Funkkennung aus der Sequenz K2 versehen wird.

Zum nachfolgenden Zeitpunkt t7, wird zudem die Sequenz K4 initialisiert bzw. aktiviert, sodass nun grundsätzlich für zu sendende Funksignale vorbehaltlich der Auswahlvorschrift sämtliche vier Sequenzen K1 bis K4 zur Verfügung stehen. So kann beispielsweise das zum nachfolgenden Zeitpunkt t8 zu sendende Funksignale m5 gemäß Auswahlvorschrift der Sequenz K3 zugeordnet werden und aus dieser seine Funkkennung erhalten. Zum Zeitpunkt t9 wird die Sequenz K3 dagegen deaktiviert oder gar gelöscht, sodass sie danach zumindest temporär (im Falle einer bloßen Deaktivierung) nicht mehr zur Verfügung steht. Für das Senden der nachfolgenden Funksignale m6, m7 und m8 (Zeitpunkte t10, t11, t12) stehen somit grundsätzlich nur die Sequenzen K1, K2 und K4 zur Verfügung. Im dargestellten Beispiel werden durch die jeweils anwendbare Auswahlvorschrift für m6 und m7 jeweils eine Funkkennung aus der ersten Sequenz K1 und für m8 eine Funkkennung aus der Sequenz K2 ausgewählt. Zum nachfolgenden Zeitpunkt t13 wird die erste Sequenz K1 gelöscht bzw. deaktiviert, sodass sie für das Senden der weiteren in Fig. 2 dargestellten Funksignale m9 und m10 nicht mehr zur Verfügung steht. Stattdessen sind für diese Funksignale nur noch die Sequenzen K2 und K4 verfügbar. Gemäß der jeweiligen Auswahlvorschrift wird das Funksignal m9, welches zum Zeitpunkt t14 zu senden ist, der Sequenz K4 zugeordnet und enthält seine Funkkennung aus dieser, während dies für das weitere, zum Zeitpunkt t15 zu sendende Funksignal m10 die Sequenz K2 ist.

Im einfachsten Fall, gehören sämtliche Funksignale m1 bis m10 zum selben Sender/Empfänger-Paar. In anderen, komplexeren, Fällen sind jedoch mehrere Sender/Empfänger-Paare involviert, die ihre Funksignale mit Funkkennungen aus einer Mehrzahl der Sequenzen K1 bis K4 versehen. Insbesondere ist es auch möglich, dass zumindest für ein, vorzugsweise für jedes, Sender/Empfänger-Paar eine Teilmenge der insgesamt verfügbaren Sequenzen definiert ist, sodass für diese Sender/Empfänger-Paar nur Sequenzen aus dieser Teilmenge zur Bereitstellung von entsprechenden Funkkennungen herangezogen werden.

Empfängerseitig werden die Sequenzen K1 bis K4 gleichermaßen verwendet, um die Funkkennungen zu generieren, die mit den empfangenen Funksignalen zum Zwecke der Identifizierung des jeweiligen Senders abzugleichen sind.

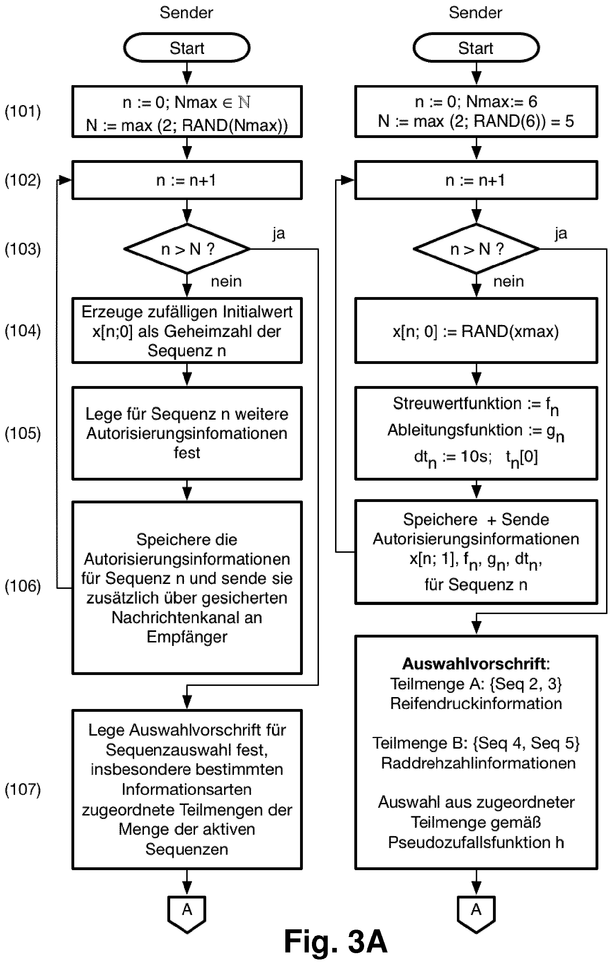

Unter Bezugnahme auf das in den **Figuren 3A-3C** dargestellte Flussdiagramm wird im Folgenden eine beispielhafte Ausführungsform des senderseitigen Verfahrens gemäß dem ersten Aspekt der Erfindung genauer beschrieben. Dabei zeigt die jeweils linke Hälfte der Figuren den Verfahrensablauf generisch, während gleichlaufend dazu auf der jeweils rechten Seite der Figuren dasselbe Verfahren anhand konkreter Beispiele illustriert wird.

Das Verfahren weist dabei zunächst eine Initialisierungsphase auf, welche die im Flussdiagramm dargestellten Schritte 101 bis 108 umfasst. Im Schritt 101 wird eine maximale Anzahl Nmax (wobei Nmax eine natürliche Zahl ist, d.h. Nmax $\in$ N) von gleichzeitig verfügbaren Sequenzen definiert, im gezeigten Beispiel als Nmax := 6. Des Weiteren wird ein Zähler n initialisiert, im Beispiel als n:= 0. Die Anzahl N der während der Initialisierungsphase zu initialisierenden Sequenzen kann dann insbesondere gleich Nmax gesetzt werden, oder wie im gezeigten Beispiel unter Berücksichtigung der durch Nmax definierten Höchstzahl an Sequenzen und eine minimale Anzahl von zwei Sequenzen pseudozufallsgesteuert festgelegt werden. Die Funktion RAND(Nmax) soll hier für eine solche Pseudozufallsfunktion stehen, die einen Wert zwischen 1 und Nmax ausgibt. Selbstverständlich sind auch andere Wege zur Festlegung der Anzahl N an Sequenzen denkbar.

Im nachfolgenden Schritt 102 wird der Zähler n inkrementiert und im Schritt 103 geprüft, ob noch weitere Sequenzen zu initialisieren sind. Ist dies nicht der Fall (103 - ja), so wird unmittelbar zum weiter unten beschriebenen Schritt 107 verzweigt. Andernfalls, (103 - nein), wird im Schritt 104 für die aktuelle zum Zählerstand von n korrespondierende Sequenz ein Initialwert x[n; 0] als Geheimzahl dieser Sequenz erzeugt, wobei die Erzeugung des Initialwerts entweder nicht-deterministisch zufällig oder aber, wie hier dargestellt, pseudozufällig erfolgt. Der frei wählbare Parameter *xmax* steht hierbei für eine Begrenzung des Wertebereichs, in dem der Initialwert pseudozufällig erzeugt wird. Dies kann insbesondere mit einem bekannten Verfahren zur nicht-deterministischen Erzeugung von Zufallszahlen auf Basis von physikalischen Effekten, wie etwa Impulsschwankungen elektronischer Schaltungen (z. B. thermisches Rauschen eines Widerstands) oder Ähnlichem erfolgen. Im Schritt 105, der insbesondere auch mit dem Schritt 104 zusammenfallen kann, werden für die Sequenz weitere Autorisierungsinformationen festgelegt. Dies sind insbesondere die Erzeugungsvorschrift für eine Sequenz von Funkkennungen y[n;i], mit i=1,2,..., welche eine Streuwertfunktion $f_n$ sowie eine auf deren Ausgabewerte anwendbare Ableitungsfunktion $g_n$ spezifiziert, sowie ein Aktualisierungsschema und dessen als Zeitreferenz dienender initialer Zeitpunkt $t_n[0]$. Das Aktualisierungsschema besteht im vorliegenden Beispiel darin, dass periodisch in konstanten Zeitabschnitten, z. B. $dt_n$ = 10s, die jeweils nächste Funkkennung der Sequenz als aktuelle Funkkennung gewählt wird. Im Schritt 106 werden diese Autorisierungsinformationen über einen gesicherten Nachrichtenkanal an den Empfänger übertragen und auch senderseitig gespeichert. Sodann wird zum Schritt 102 zurückgekehrt.

Wenn im Schritt 103 die Initialisierungsschleife verlassen wird (103 - ja) wird im anschließenden Schritt 107 zudem eine Auswahlvorschrift zur Sequenzauswahl festgelegt. Dabei können, wie im vorliegenden Beispiel, insbesondere bestimmten Informationsarten zugeordnete Teilmengen der Gesamtmenge der aktiven Sequenzen bestimmt werden. Im Beispiel wurde etwa eine erste Teilmenge A definiert, welche die Sequenzen 2 und 3 aufweist und speziell für Reifendruckinformationen eines bestimmten Fahrzeugrades vorgesehen ist. Eine weitere Teilmenge B, welche die Sequenzen 4 und 5 aufweist, ist dagegen für Informationen betreffend die Raddrehzahl desselben Fahrzeugrades zugeordnet. Zudem wird eine Pseudozufallsfunktion h definiert, die dazu dient, innerhalb einer Teilmenge beim Vorhandensein mehrerer aktiver Sequenzen darin eine bestimmte davon als Quelle einer Funkkennung für das nächste zu sendende Funksignal auszuwählen. Im Schritt 108 wird die Auswahlvorschrift ebenfalls über den gesicherten Nachrichtenkanal an den Empfänger gesendet. Insbesondere im Zusammenhang mit einer Funkkommunikation zwischen Funktionskomponenten innerhalb eines Fahrzeugs 1 können die Schritte 101 bis 108 sowie die zugehörigen Schritte des Empfangs der dabei gesendeten Informationen auf der Empfängerseite bereits ab Werk im Rahmen einer Initialisierungsprozedur erfolgen.

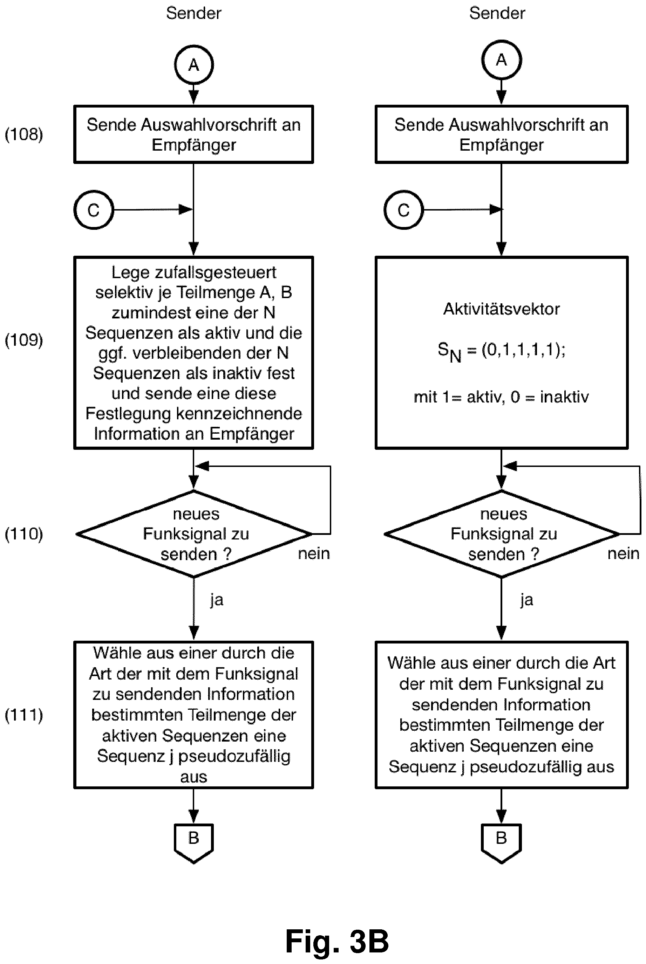

Die der Initialisierungsphase folgende operative Phase beginnt mit einem Schritt 109, in dem im vorliegenden Beispiel, um die Anzahl der jeweils aktiven Sequenzen zu variieren, diese selektiv (deterministisch oder nicht-deterministisch) zufallsgesteuert aktiviert bzw. deaktiviert werden. Damit dabei stets gewährleistet bleibt, dass jegliche zu übertragenden Funksignale stets aus einer der damit übermittelten Informationsart zugeordneten aktiven Sequenz eine aktuelle Funkkennung erhalten können, erfolgt das Aktivieren bzw. Deaktivieren unter der Maßgabe, dass pro Teilmenge A, B stets zumindest eine der darin enthaltenen Sequenzen aktiv sein muss. Die aktuelle Festlegung, welche der Sequenzen derzeit aktiviert bzw. deaktiviert sind, wird ebenfalls an den Empfänger übermittelt (z.B. als Anmelde- bzw. Abmeldeinformation für die Sequenzen), was beispielsweise anhand eines Aktivitätsvektors $S_N$ erfolgen kann, wie auf der rechten Seite von Figur 3B zum Schritt 109 dargestellt, der für jede Sequenz einen Wert, z.B. ein Bit, enthält, der angibt, ob die zugehörige Sequenz derzeit aktiv oder inaktiv ist.

Somit ist das Verfahren nun bereit, ein neues Funksignal zu senden. Ob ein solches vorliegt, wird im Schritt 110 geprüft. Ist dies der Fall (110 - ja), so wird im Schritt 111 aus einer durch die Art der mit dem Funksignal zu sendenden Information bestimmten Teilmenge A bzw. B der aktiven Sequenzen eine Sequenz j pseudozufällig (mittels der Funktion h) ausgewählt. Andernfalls (110 - nein), wird die Prüfung im Schritt 110 solange wiederholt, bis ein neues zu sendendes Funksignal vorliegt oder ein Abbruch des Verfahrens angefordert wird (nicht dargestellt).

Für die ausgewählte Sequenz j wird im Schritt 112 noch geprüft, ob die zugeordnete Zeitspanne $dt_j$ abgelaufen ist und somit eine erneute Aktualisierung ansteht. Die Zeitspanne kann dabei beispielsweise mittels eines Zählers

EP 3 766 268 B1

implementiert sein, der bis zu einem der Zeitspanne entsprechenden Schwellwert hochzählt (auch ein entsprechendes Rückwärtszählen im Sinne eines Countdown ist natürlich vorstellbar), sodann eine den Ablauf der Zeitspanne signalisierende Ausgabe auslöst, und sofort anschließend mit der nächsten Zählung beginnt. Auch kann zusätzlich oder unabhängig zu einer solchen umlaufenden Zählung schon auf Basis der Kenntnis des Initialwerts $t_j[0]$ und der Zeitspanne $dt_j$ die entsprechende Prüfung durchgeführt werden. Ist gemäß der Prüfung im Schritt 112 die aktuelle Zeitspanne $dt_j$ noch nicht abgelaufen, sodass noch kein Aktualisierungsbedarf besteht (112 - nein), so springt das Verfahren unmittelbar zum Schritt 116, bei dem das Funksignal mit der aktuellen Funkkennung y[j; i] aus der Sequenz j an den zugeordneten Empfänger gesendet wird. Andernfalls (112 - ja) wird für die Sequenz j die nächste Iteration i:= i+1 gemäß ihrem Aktualisierungsschema ausgelöst.

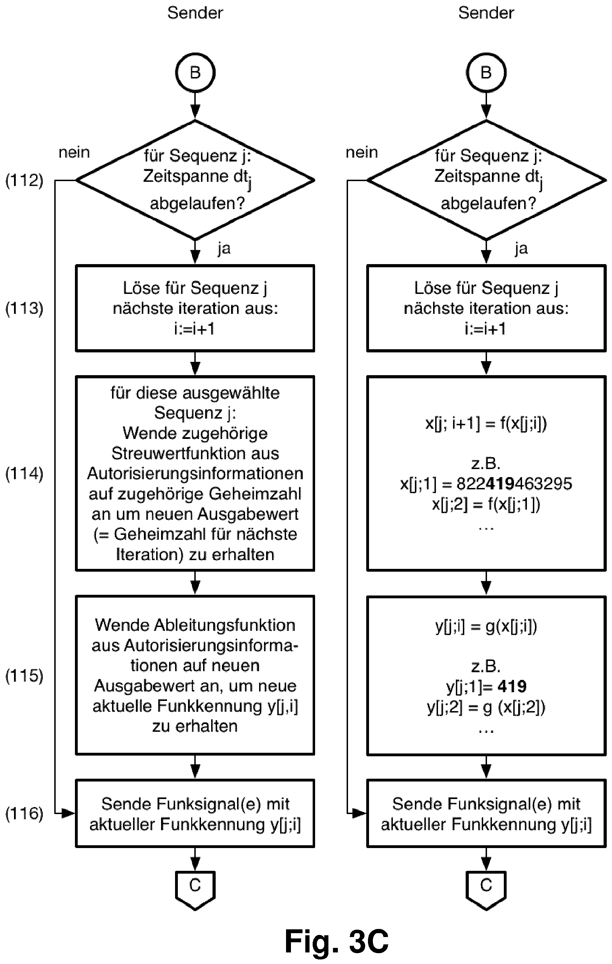

Zur Aktualisierung wird im Schritt 114 die in den Aktualisierungsinformationen spezifizierte Streuwertfunktion $f_j$ auf die letzte Geheimzahl x[j;i-1] angewendet, um einen neuen Ausgabewert, d.h. eine neue Geheimzahl x[j;i] = f(x[j;i-1]) zu erhalten. Diese neue Geheimzahl dient zum einen als Eingabewert für die nächste Iteration, und zum anderen als Eingabewert für die Ableitungsfunktion $g_j$., die im Schritt 115 aus der Geheimzahl x[j;i] die Funkkennung y[j;i] für die gerade laufende Iteration ableitet. Im Beispiel erfolgt die Ableitung dadurch, dass die Stellen 4 bis 6 der Geheimzahl herausgefiltert werden und die jeweils neue Funkkennung y[j;i] bilden. Für die erste Iteration ist dies in dem in **Fig. 3C** gezeigten Beispiel die Funkkennung:

$$y[j;1] = g_j(f(x[j;0])) = g_j(f_j(25360256)) = g_j(822\mathbf{419}463295) = 419.$$

Da somit nur ein Teil der erzeugten Geheimzahl x[j;i] in die Funkkennung y[j;i] übernommen wird, wirkt die Ableitungsfunktion $g_j$ informationsreduzierend, denn die Geheimzahl x[j;i] kann nicht eindeutig aus der daraus abgeleiteten Funkkennung y[j;i] rekonstruiert werden, so dass hier zusätzliche Sicherheit gegenüber unautorisiertem Nachverfolgen geschaffen wird.

Im Schritt 116 wird schließlich das Funksignal, optional auch mehrere, mit der aktuellen Funkkennung y[j;i] an den zugehörigen Empfänger gesendet. Sodann verzweigt das Verfahren zum Schritt 109 für einen erneuten Durchlauf zurück.

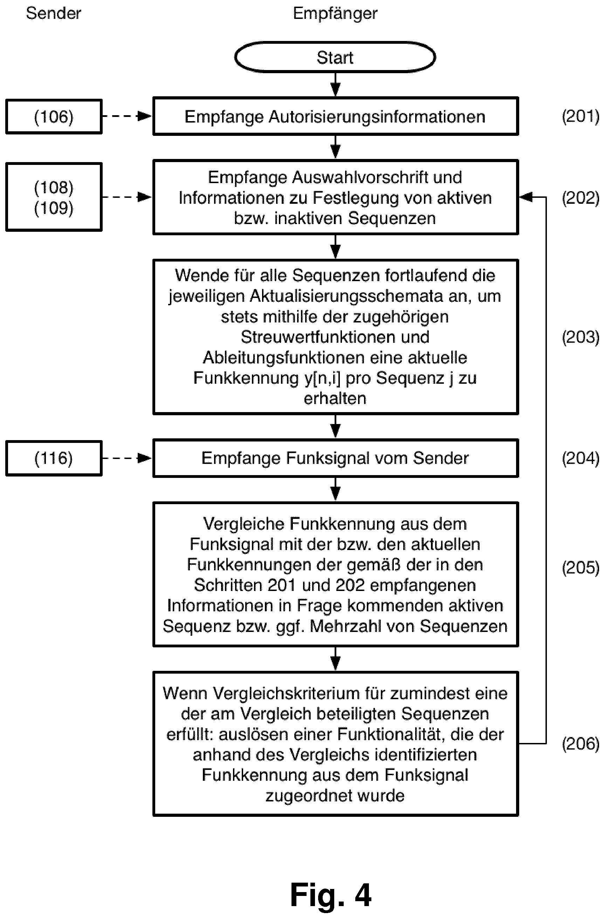

**Fig. 4** illustriert eine beispielhafte Ausführungsform des entsprechenden Empfängers seitlichen Verfahrens gemäß dem zweiten Aspekt der Erfindung im Wechselspiel mit dem bereits vorausgehend beschriebenen senderseitigen Verfahren.

In einem Schritt 201 werden die senderseitigen Schritt 106 gesendeten Autorisierungsinformationen empfangen. In einem weiteren Schritt 202, werden zudem die in den Schritten 108 bzw. 109 vom Sender übermittelten Informationen zur Auswahlvorschrift sowie zur Festlegung von aktiven Beziehungen sie inaktiven Sequenzen empfangen. Die Schritte 201 und 202 können selbstverständlich auch - in Abhängigkeit davon, zu welchen Zeitpunkten die entsprechenden Sendeschritte 106,108, 109 erfolgen - zusammenfallen.

Empfängerseitig werden im Schritt 203 fortlaufend die jeweiligen Aktualisierungsschemata angewendet, um stets mithilfe der zugehörigen Streuwertfunktionen und Ableitungsfunktionen auch gleiche Weise wie senderseitig in den Schritten 113 bis 115 beschrieben, eine aktuelle Funkkennung y [n; i] für jede der definierten N Sequenzen zu erhalten. Dabei kann empfängerseitig je Sequenz n aus dem Aktualisierungsschema und der Kenntnis des initialen Zeitpunkts $t_n[0]$ entnommen werden kann, welche Iteration gerade senderseitig aktuell ist, d.h. mit welcher Funkkennung der Sequenz der Sender ggf. gegenwärtig sendet.

In einem Schritt 204 wird sodann ein Funksignal, welches vom Sender im Schritt 116 gesendet wurde, empfangen und in einem Schritt 205 die Funkkennung aus dem Funksignal extrahiert und mit der aktuellen Funkkennung bzw. den aktuellen Funkkennungen der gemäß der in den Schritten 201 und 202 empfangenen Informationen infrage kommenden aktiven Sequenz bzw. gegebenenfalls Mehrzahl von aktiven Sequenzen gemäß einem vordefinierten Vergleichskriterium verglichen. Das Vergleichskriterium kann insbesondere darin bestehen, zu prüfen, ob die beiden verglichenen Funkkennungen übereinstimmen. Wird das Vergleichskriterium erfüllt, so wird im Schritt 206 empfängerseitig eine entsprechende zugeordnete Funktionalität ausgelöst, wie bereits oben im Zusammenhang mit Fig. 1 beispielhaft beschrieben.

BEZUGSZEICHENLISTE

1    Fahrzeug (Kraftfahrzeug)
2    Reifensensor
3    Mobilfunkvorrichtung (Beispiel Smartphone)
4    Schließanlage

5 Steuergerät
5a Verarbeitungseinheit
5b Kommunikationseinheit
6 Gateway

**Patentansprüche**

1. Verfahren zum Senden von Funkkennungen mittels einer mobilen Funkvorrichtung (2; 3), aufweisend:

wiederholtes Senden von Funksignalen, welche als eine mit der Funkvorrichtung (2; 3) verknüpfte Identität gegenüber einem Empfänger der Funksignale jeweils eine Funkkennung enthalten, wobei diese jeweilige Funkkennung für jedes der Funksignale dynamisch aus einer Mehrzahl von vordefinierten, verschiedenen und jeweils pseudozufälligen Sequenzen von Funkkennungen ausgewählt wird, indem eine der Sequenzen gemäß einer vorbestimmten Auswahlvorschrift ausgewählt wird und aus der so ausgewählten Sequenz gemäß einem dieser Sequenz zugeordneten vorbestimmten deterministischen Aktualisierungsschema eine der darin enthaltenen Funkkennungen ausgewählt wird und wobei das Verfahren **dadurch gekennzeichnet ist, dass** die Anzahl der Sequenzen, aus denen gemäß der Auswahlvorschrift die Auswahl derjenigen Sequenz erfolgt, aus der die nächste für das Senden eines der Funksignale zu verwendenden Funkkennung auszuwählen ist, dynamisch variiert wird.

2. Verfahren nach Anspruch 1, wobei gemäß der vorbestimmten Auswahlvorschrift die Auswahl derjenigen Sequenz, aus der die nächste für das Senden eines der Funksignale zu verwendenden Funkkennung auszuwählen ist, auf einem der folgenden Wege erfolgt:

(a) deterministisch;
(b) nicht-deterministisch.

3. Verfahren nach Anspruch 2, wobei die deterministische Auswahl mit Hilfe eines deterministischen Zufallszahlengenerators erfolgt und die nicht-deterministische Auswahl mit Hilfe eines nicht-deterministischen Zufallszahlengenerators erfolgt.

4. Verfahren nach einem der Ansprüche 1 bis 3, wobei das dynamische Variieren der Anzahl der Sequenzen mittels einer oder mehrere der folgenden Maßnahmen erfolgt:

- Erzeugen einer oder mehrere neuer Sequenzen;
- Löschen einer oder mehrere bereits vorhandener Sequenzen;
- Zumindest temporäres Aktivieren oder Deaktivieren einer oder mehrerer bereits vorhandener Sequenzen, so dass gemäß der Auswahlvorschrift nur derzeit aktivierte Sequenzen auswählbar sind, während derzeit deaktivierte Sequenzen erst nach erneuter Aktivierung erneut auswählbar sind.

5. Verfahren nach Anspruch 4, wobei zumindest eine der Maßnahmen zum dynamischen Variieren der Anzahl der Sequenzen auf deterministische Weise pseudozufallsgesteuert ist.

6. Verfahren nach Anspruch 4 oder 5, wobei im Falle einer Erzeugung einer neuen Sequenz oder einer Aktivierung, einer Deaktivierung oder eines Löschens einer bereits vorhandenen Sequenz auf gegenüber unbefugtem Zugriff gesicherte Weise eine entsprechende Anmelde- bzw. Abmeldeinformation bezüglich der Sequenz an den Empfänger der Funksignale gesendet wird.

7. Verfahren nach einem der vorausgehenden Ansprüche, wobei die Auswahl derjenigen Sequenz, aus der die nächste für das Senden eines der Funksignale zu verwendenden Funkkennung auszuwählen ist, gemäß der Auswahlvorschrift in Abhängigkeit von der Art der mittels des Funksignals an den Empfänger zu übermittelnden Informationen getroffen wird.

8. Verfahren nach Anspruch 7, wobei die Auswahl derjenigen Sequenz, aus der für eine Funkkennung für ein nächstes Funksignal zur Übermittlung einer bestimmten Art von Information auszuwählen ist, gemäß der Auswahlvorschrift auf solche Weise in Abhängigkeit von der Art der Informationen getroffen wird, dass:

für verschiedene Arten von Informationen jeweils unterschiedliche zugeordnete Teilmengen der aus der Mehrzahl an Sequenzen gebildeten Menge an Sequenzen definiert werden, und
die Auswahl der Funkkennung für die mit dem Funksignal zu übermittelnde Information nur aus denjenigen Sequenzen erfolgt, die in der der Art der mit dem Funksignal zu übermittelnden Information zugeordneten Teilmenge an Sequenzen enthalten sind.

9.  Verfahren zum Identifizieren einer ersten mobilen Funkvorrichtung (2; 3) an einer Empfangsvorrichtung (5; 6), wobei das Verfahren die folgenden Schritte umfasst:

Empfangen eines Funksignals, das eine Funkkennung als eine mit einer das Funksignal aussendenden Signalquelle verknüpfte Identität enthält;
Vergleichen der Funkkennung des empfangenen Funksignals mit einer oder mehreren Funkkennungen, die jeweils aus einer anderen Sequenz, welche aus einer Mehrzahl von vordefinierten, verschiedenen und jeweils pseudozufälligen Sequenzen von Funkkennungen gemäß einer vorbestimmten Auswahlvorschrift ausgewählt werden, gemäß einem der jeweiligen ausgewählten Sequenz zugeordneten vorbestimmten deterministischen Aktualisierungsschema ausgewählt werden; und
Auslösen einer vorbestimmten Funktionalität an der Empfangsvorrichtung, nur in dem Fall, dass bei dem Vergleichen festgestellt wird, dass die empfangene Funkkennung mit einer der dabei mit ihr verglichenen Funkkennungen gemäß einem vorbestimmten Vergleichskriterium übereinstimmen,
wobei das Verfahren **dadurch gekennzeichnet ist, dass**
empfängerseitig die Auswahl der gemäß der Auswahlvorschrift auszuwählenden einen oder mehreren Sequenzen in Abhängigkeit von der Art der im empfangenen Funksignal enthaltenen Information auf solche Weise erfolgt, dass für verschiedene Arten von Informationen jeweils unterschiedliche zugeordnete Teilmengen der aus der Mehrzahl an Sequenzen gebildeten Menge an Sequenzen ausgewählt werden; und
die Auswahl der Funkkennungen zum Vergleichen mit der Funkkennung des empfangenen Funksignals nur aus denjenigen einen oder mehreren Sequenzen erfolgt, die in der derart ausgewählten, der Art der Information aus dem empfangenen Funksignal zugeordneten Teilmenge an Sequenzen enthalten sind.

10. Verfahren gemäß einem der vorausgehenden Ansprüche, wobei:

jede der pseudozufälligen Sequenzen von Funkkennungen reproduzierbar nach einer Erzeugungsvorschrift, ausgehend von einem Initialwert als Eingabewert für die Erzeugungsvorschrift, generiert wird;
die Erzeugungsvorschrift die iterative Anwendung einer kryptographischen Streuwertfunktion umfasst, die bei jeder Iteration aus wenigstens einem Eingabewert einen Ausgabewert für die jeweilige Iteration liefert, von dem die Funkkennung für das zugehörige Element der Sequenz von Funkkennungen abgeleitet wird; und
der Initialisierungswert als ein Eingabewert für die erste Iteration dient und für die nachfolgenden Iterationen jeweils der Ausgabewert der unmittelbar vorangegangenen Iteration als ein Eingabewert dient.

11. Verfahren gemäß Anspruch 10, wobei für wenigstens eine der Iterationen die zugehörige Funkkennung durch Anwendung einer informationsreduzierenden Ableitungsvorschrift auf den Ausgabewert dieser Iteration erzeugt wird.

12. Mobile Funkvorrichtung (2; 3; 4; 5; 6), aufweisend:

eine Kommunikationseinheit (5b) zur Funkkommunikation mit einer Gegenseite; und
eine Verarbeitungseinheit (5a) zum Erzeugen von pseudozufälligen Sequenzen von Funkkennungen und zum Auswählen von Funkkennungen aus den Sequenzen;
wobei die mobile Funkvorrichtung (2; 3; 4; 5; 6) konfiguriert oder konfigurierbar ist, das Verfahren gemäß wenigstens einem der Ansprüche 1 bis 11 auszuführen.

13. System zum Senden und Identifizieren von Funkkennungen, aufweisend:

wenigstens eine erste mobile Funkvorrichtung (2; 3) gemäß Anspruch 12, die konfiguriert oder konfigurierbar ist, das Verfahren gemäß wenigstens einem der Ansprüche 1 bis 8 auszuführen; und
wenigstens eine Empfangsvorrichtung (5; 6), die konfiguriert oder konfigurierbar ist, im Zusammenspiel mit der als Sender wirkenden wenigstens einen ersten mobilen Funkvorrichtung (2; 3) das Verfahren gemäß einem der Ansprüche 9 bis 11 auszuführen.

14. System nach Anspruch 13, bei dem die wenigstens eine Empfangsvorrichtung (5; 6) eine zweite mobile Funkvorrichtung ist.

15. Fahrzeug (1) mit einer mobilen Funkvorrichtung (2; 3; 4; 5; 6) gemäß Anspruch 12 oder einem System gemäß einem der Ansprüche 13 oder 14.

**Claims**

1. Method for transmitting radio identifiers by means of a mobile radio apparatus (2; 3), comprising:
repeatedly transmitting radio signals that each contain a radio identifier as an identity, linked to the radio apparatus (2; 3), vis-à-vis a receiver of the radio signals, this respective radio identifier being dynamically selected, for each of the radio signals, from a plurality of predefined, different and in each case pseudorandom sequences of radio identifiers by selecting one of the sequences in accordance with a predetermined selection rule and selecting from the thus selected sequence, in accordance with a predetermined deterministic update scheme associated with this sequence, one of the radio identifiers contained therein, and the method being **characterized in that** the number of sequences from which the selection is made, in accordance with the selection rule, for that sequence from which the next radio identifier to be used for transmitting one of the radio signals is to be selected is dynamically varied.

2. Method according to Claim 1, wherein the selection for that sequence from which the next radio identifier to be used for transmitting one of the radio signals is to be selected is made, in accordance with the predetermined selection rule, in one of the following ways:

   (a) deterministically;
   (b) nondeterministically.

3. Method according to Claim 2, wherein the deterministic selection is made using a deterministic random number generator and the nondeterministic selection is made using a nondeterministic random number generator.

4. Method according to one of Claims 1 to 3, wherein the number of sequences is dynamically varied by means of one or more of the following measures:

   - generating one or more new sequences;
   - deleting one or more already existing sequences;
   - at least temporarily activating or deactivating one or more already existing sequences, so that, in accordance with the selection rule, only currently activated sequences are selectable, while currently deactivated sequences are reselectable only after fresh activation.

5. Method according to Claim 4, wherein at least one of the measures for dynamically varying the number of sequences is pseudorandomly controlled in a deterministic manner.

6. Method according to Claim 4 or 5, wherein if a new sequence is generated or an already existing sequence is activated, deactivated or deleted in a manner protected against unauthorized access, applicable logon or logoff information for the sequence is transmitted to the receiver of the radio signals.

7. Method according to one of the preceding claims, wherein the selection for that sequence from which the next radio identifier to be used for transmitting one of the radio signals is to be selected is made, in accordance with the selection rule, on the basis of the type of information to be transmitted to the receiver by means of the radio signal.

8. Method according to Claim 7, wherein the selection for that sequence from which a selection is to be made for a radio identifier for a next radio signal for transmitting a specific type of information is made, in accordance with the selection rule, on the basis of the type of information in such a way that:
different associated subsets of the set of sequences that is formed from the plurality of sequences are defined for each of different types of information, and the selection for the radio identifier for the information to be transmitted using the radio signal is made only from those sequences that are included in the subset of sequences that is associated with the type of information to be transmitted using the radio signal.

9. Method for identifying a first mobile radio apparatus (2; 3) at a receiving apparatus (5; 6), the method comprising the following steps:

receiving a radio signal that contains a radio identifier as an identity linked to a signal source transmitting the radio signal;

comparing the radio identifier of the received radio signal with one or more radio identifiers that are each selected from another sequence, which are selected from a plurality of predefined, different and in each case pseudorandom sequences of radio identifiers in accordance with a predetermined selection rule, in accordance with a predetermined deterministic update scheme associated with the respective selected sequence; and

triggering a predetermined functionality on the receiving apparatus only if the comparison results in it being found that the received radio identifier matches one of the radio identifiers compared with it at this time in accordance with a predetermined comparison criterion,

the method being **characterized in that**

the selection for the one or more sequences that are to be selected in accordance with the selection rule is made at the receiver on the basis of the type of information contained in the received radio signal in such a way that different associated subsets of the set of sequences that is formed from the plurality of sequences are selected for each of different types of information; and

the selection for the radio identifiers for comparison with the radio identifier of the received radio signal is made only from those one or more sequences that are included in the thus selected subset of sequences that is associated with the type of information from the received radio signal.

10. Method according to one of the preceding claims, wherein:

each of the pseudorandom sequences of radio identifiers is generated reproducibly according to a generation rule, based on an initial value as input value for the generation rule;

the generation rule comprises the iterative application of a cryptographic hash function that, for each iteration, delivers an output value for the respective iteration from at least one input value, the output value being used to derive the radio identifier for the related element of the sequence of radio identifiers; and

the initialization value is used as an input value for the first iteration and the output value from the directly preceding iteration is used as an input value for each of the subsequent iterations.

11. Method according to Claim 10, wherein the related radio identifier for at least one of the iterations is generated by applying an information-reducing derivation rule to the output value from this iteration.

12. Mobile radio apparatus (2; 3; 4; 5; 6), comprising:

a communication unit (5b) for radio communication with an opposite side; and

a processing unit (5a) for generating pseudorandom sequences of radio identifiers and for selecting radio identifiers from the sequences;

wherein the mobile radio apparatus (2; 3; 4; 5; 6) is configured or configurable to carry out the method according to at least one of Claims 1 to 11.

13. System for transmitting and identifying radio identifiers, comprising:

at least one first mobile radio apparatus (2; 3) according to Claim 12, which is configured or configurable to carry out the method according to at least one of Claims 1 to 8; and

at least one receiving apparatus (5; 6), which is configured or configurable to carry out the method according to one of Claims 9 to 11 in conjunction with the at least one first mobile radio apparatus (2; 3) acting as transmitter.

14. System according to Claim 13, in which the at least one receiving apparatus (5; 6) is a second mobile radio apparatus.

15. Vehicle (1) having a mobile radio apparatus (2; 3; 4; 5; 6) according to Claim 12 or a system according to either of Claims 13 and 14.

**Revendications**

1. Procédé pour envoyer des indicatifs radio au moyen d'un dispositif de radiocommunication mobile (2 ; 3), comprenant :

émission répétée de signaux radioélectriques, lesquels contiennent respectivement un indicatif radio en tant qu'identité liée au dispositif de radiocommunication (2 ; 3) par rapport à un récepteur des signaux radioélectriques, cet indicatif radio respectif étant sélectionné pour chacun des signaux radioélectriques dynamiquement à partir d'une pluralité de séquences d'indicatifs radio prédéfinies, différentes et respectivement pseudoaléatoires, en sélectionnant l'une des séquences conformément à une règle de sélection prédéterminée et en sélectionnant, à partir de la séquence ainsi sélectionnée, l'un des indicatifs radio contenus dans celle-ci conformément à un schéma d'actualisation déterministe prédéterminé associé à cette séquence et le procédé étant **caractérisé en ce que** le nombre de séquences à partir desquelles est effectuée, conformément à la règle de sélection, la sélection de la séquence à partir de laquelle doit être sélectionné le prochain indicatif radio à utiliser pour l'émission de l'un des signaux radioélectriques, fait l'objet d'une variation dynamique.

2. Procédé selon la revendication 1, conformément à la règle de sélection, la sélection de la séquence à partir de laquelle doit être sélectionné le prochain indicatif radio à utiliser pour l'émission de l'un des signaux radioélectriques s'effectuant de l'une des façons suivantes :

   (a) de manière déterministe ;
   (b) de manière non déterministe.

3. Procédé selon la revendication 2, la sélection déterministe s'effectuant à l'aide d'un générateur de nombres aléatoire déterministe et la sélection non déterministe s'effectuant à l'aide d'un générateur de nombres aléatoire non déterministe.

4. Procédé selon l'une des revendications 1 à 3, la variation dynamique du nombre de séquences s'effectuant au moyen d'une ou plusieurs des mesures suivantes :

   - génération d'une ou plusieurs nouvelles séquences ;
   - suppression d'une ou plusieurs des séquences déjà présentes ;
   - activation ou désactivation au moins temporaire d'une ou plusieurs des séquences déjà présentes, de sorte que conformément à la règle de sélection, seules peuvent être sélectionnées les séquences actuellement activées alors que les séquences actuellement désactivées ne peuvent être sélectionnées qu'après une nouvelle activation.

5. Procédé selon la revendication 4, au moins l'une des mesures de variation dynamique du nombre de séquences étant commandée de manière pseudoaléatoire de façon déterministe.

6. Procédé selon la revendication 4 ou 5, dans le cas d'une génération d'une nouvelle séquence ou d'une activation, une désactivation ou une suppression d'une séquence déjà présente, une information de connexion ou de déconnexion correspondante concernant la séquence est envoyée d'une façon sécurisée contre un accès non autorisé au récepteur des signaux radioélectrique.

7. Procédé selon l'une des revendications précédentes, la sélection de la séquence à partir de laquelle doit être sélectionné le prochain indicatif radio à utiliser pour l'émission de l'un des signaux radioélectriques, étant effectuée, conformément à la règle de sélection, en fonction du type des informations communiquées au récepteur au moyen du signal radioélectrique.

8. Procédé selon la revendication 7, la sélection de la séquence à partir de laquelle doit être effectuée la sélection pour un indicatif radio pour un prochain signal radioélectrique en vue de communiquer un type déterminé d'informations étant effectuée, conformément à la règle de sélection, en fonction du type des informations de telle sorte que :

   des sous-ensembles associés respectivement différents de l'ensemble de séquences formé de la pluralité de séquences sont définis pour différents types d'informations et
   la sélection de l'indicatif radio pour les informations à communiquer avec le signal radioélectrique n'est effectuée qu'à partir des séquences qui sont contenues dans le sous-ensemble de séquences associées au type d'informations à communiquer avec le signal radioélectrique.

9. Procédé d'identification d'un premier dispositif de radiocommunication mobile (2 ; 3) au niveau d'un dispositif de réception (5 ; 6), le procédé comprenant les étapes suivantes :

   réception d'un signal radioélectrique, qui contient un indicatif radio en tant qu'identité liée à une source de signal qui émet le signal radioélectrique ;

comparaison de l'indicatif radio du signal radioélectrique reçu avec un ou plusieurs indicatifs radio, lesquels sont respectivement sélectionnés à partir d'une autre séquence, laquelle est sélectionnée à partir d'une pluralité de séquences d'indicatifs radio prédéfinies, différentes et respectivement pseudoaléatoires conformément à une règle de sélection prédéterminée, conformément à un schéma d'actualisation déterministe prédéterminé associé à la séquence respectivement sélectionnée ; et

déclenchement d'une fonctionnalité prédéterminée au niveau du dispositif de réception, seulement dans le cas où la comparaison a permis de constater que l'indicatif radio reçu coïncide avec l'un des indicatifs radio comparés avec celui-ci conformément à un critère de comparaison prédéterminé,

le procédé étant **caractérisé en ce que**

du côté du récepteur, la sélection de l'une ou des plusieurs séquences à sélectionner conformément à la règle de sélection s'effectue en fonction du type des informations contenues dans le signal radioélectrique reçu de telle sorte que pour différents types d'informations, des sous-ensembles associés respectivement différents de l'ensemble de séquences formé de la pluralité de séquences sont sélectionnés pour différents types d'informations ; et

la sélection des indicatifs radio à comparer avec l'indicatif radio du signal radioélectrique reçu ne s'effectue qu'à partir de l'une ou des plusieurs séquences qui sont contenues dans le sous-ensemble de séquences ainsi sélectionnées associées au type d'informations issues du signal radioélectrique reçu.

10. Procédé selon l'une des revendications précédentes, selon lequel :

chacune des séquences pseudoaléatoires d'indicatifs radio est générée de manière reproductible conformément à une règle de génération, en partant d'une valeur initiale en tant que valeur d'entrée pour la règle de génération ;
la règle de génération comprend l'application itérative d'une fonction de variance cryptographique qui, à chaque itération, fournit à partir d'au moins une valeur d'entrée une valeur de sortie pour l'itération respective, de laquelle est dérivée l'indicatif radio pour l'élément associé de la séquence d'indicatifs radio ; et
la valeur d'initialisation sert de valeur d'entrée pour la première itération et la valeur de sortie de l'itération immédiatement précédente sert de valeur d'entrée pour les itérations suivantes.

11. Procédé selon la revendication 10, selon lequel, pour au moins l'une des itérations, l'indicatif radio associé est généré en appliquant une règle de dérivation réduisant les informations sur la valeur de sortie de cette itération.

12. Dispositif de radiocommunication mobile (2 ; 3 ; 4 ; 5 ; 6), comprenant :

une unité de communication (5b) destinée à la radiocommunication avec un homologue ; et
une unité de traitement (5a) destinée à générer des séquences pseudoaléatoires d'indicatifs radio et sélectionner des indicatifs radio à partir des séquences ; le dispositif de radiocommunication mobile (2 ; 3 ; 4 ; 5 ; 6) étant configuré ou configurable pour mettre en œuvre un procédé selon au moins l'une des revendications 1 à 11.

13. Système pour émettre et identifier des indicatifs radio, comprenant :

au moins un premier dispositif de radiocommunication mobile (2 ; 3) selon la revendication 12, qui est configuré ou configurable pour mettre en œuvre un procédé selon au moins l'une des revendications 1 à 8 ; et
au moins un dispositif de réception (5 ; 6), qui est configuré ou configurable pour, en interaction avec au moins un premier dispositif de radiocommunication mobile (2 ; 3) agissant en tant qu'émetteur, mettre en œuvre un procédé selon au moins l'une des revendications 9 à 11.

14. Système selon la revendication 13, avec lequel l'au moins un dispositif de réception (5 ; 6) est un deuxième dispositif de radiocommunication mobile.

15. Véhicule (1) équipé d'un dispositif de radiocommunication mobile (2 ; 3 ; 4 ; 5 ; 6) selon la revendication 12 ou d'un système selon l'une des revendications 13 ou 14.

**Fig. 1.**

**Fig. 2**.

Sender

Start

(101) $n := 0; \text{Nmax} \in \mathbb{N}$
$N := \max(2; \text{RAND}(\text{Nmax}))$

(102) $n := n+1$

(103) $n > N$ ? —— ja

nein

(104) Erzeuge zufälligen Initialwert $x[n;0]$ als Geheimzahl der Sequenz n

(105) Lege für Sequenz n weitere Autorisierungsinfomationen fest

(106) Speichere die Autorisierungsinformationen für Sequenz n und sende sie zusätzlich über gesicherten Nachrichtenkanal an Empfänger

(107) Lege Auswahlvorschrift für Sequenzauswahl fest, insbesondere bestimmten Informationsarten zugeordnete Teilmengen der Menge der aktiven Sequenzen

A

Sender

Start

$n := 0; \text{Nmax} := 6$
$N := \max(2; \text{RAND}(6)) = 5$

$n := n+1$

$n > N$ ? —— ja

nein

$x[n; 0] := \text{RAND}(\text{xmax})$

Streuwertfunktion $:= f_n$
Ableitungsfunktion $:= g_n$
$dt_n := 10s; \quad t_n[0]$

Speichere + Sende Autorisierungsinformationen $x[n; 1]$, $f_n$, $g_n$, $dt_n$, für Sequenz n

**Auswahlvorschrift**:
Teilmenge A: {Seq 2, 3} Reifendruckinformation

Teilmenge B: {Seq 4, Seq 5} Raddrehzahlinformationen

Auswahl aus zugeordneter Teilmenge gemäß Pseudozufallsfunktion h

A

# Fig. 3A

Sender

Sender

**Fig. 3B**

Sender

Sender

(B)

(B)

**(112)** nein / für Sequenz j: Zeitspanne $dt_j$ abgelaufen?

**(112)** nein / für Sequenz j: Zeitspanne $dt_j$ abgelaufen?

ja

ja

**(113)** Löse für Sequenz j nächste iteration aus: i:=i+1

**(113)** Löse für Sequenz j nächste iteration aus: i:=i+1

**(114)** für diese ausgewählte Sequenz j: Wende zugehörige Streuwertfunktion aus Autorisierungsinformationen auf zugehörige Geheimzahl an um neuen Ausgabewert (= Geheimzahl für nächste Iteration) zu erhalten

**(114)** $x[j; i+1] = f(x[j;i])$

z.B.
$x[j;1] = 822\mathbf{419}463295$
$x[j;2] = f(x[j;1])$
…

**(115)** Wende Ableitungsfunktion aus Autorisierungsinformationen auf neuen Ausgabewert an, um neue aktuelle Funkkennung $y[j,i]$ zu erhalten

**(115)** $y[j;i] = g(x[j;i])$

z.B.
$y[j;1] = \mathbf{419}$
$y[j;2] = g\ (x[j;2])$
…

**(116)** Sende Funksignal(e) mit aktueller Funkkennung $y[j;i]$

**(116)** Sende Funksignal(e) mit aktueller Funkkennung $y[j;i]$

(C)

(C)

# Fig. 3C

Sender · · · · · · · · · · · Empfänger

$$\text{Start}$$

| (106) | --→ | Empfange Autorisierungsinformationen | (201) |

| (108) (109) | --→ | Empfange Auswahlvorschrift und Informationen zu Festlegung von aktiven bzw. inaktiven Sequenzen | (202) |

Wende für alle Sequenzen fortlaufend die jeweiligen Aktualisierungsschemata an, um stets mithilfe der zugehörigen Streuwertfunktionen und Ableitungsfunktionen eine aktuelle Funkkennung y[n,i] pro Sequenz j zu erhalten (203)

| (116) | --→ | Empfange Funksignal vom Sender | (204) |

Vergleiche Funkkennung aus dem Funksignal mit der bzw. den aktuellen Funkkennungen der gemäß der in den Schritten 201 und 202 empfangenen Informationen in Frage kommenden aktiven Sequenz bzw. ggf. Mehrzahl von Sequenzen (205)

Wenn Vergleichskriterium für zumindest eine der am Vergleich beteiligten Sequenzen erfüllt: auslösen einer Funktionalität, die der anhand des Vergleichs identifizierten Funkkennung aus dem Funksignal zugeordnet wurde (206)

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015204210 A1

- US 20060123134 A1

**In der Beschreibung aufgeführte Nicht-Patentliteratur**

- Protecting Location Privacy with Dynamic MAC Address Exchanging in Wireless Networks. **LEI, M. et al.** Intelligence and Security Informatics. IEEE, 2007